# EUROPEAN PATENT APPLICATION

(11) **EP 4 383 385 A1**
(43) Date of publication of application: **12.06.2024**
(21) Application number: 21960440.2
(22) Date of filing: 24.11.2021
(51) Int. Cl.: H01M 10/04, H01M 10/0583

(54) **BATTERY CELL, BATTERY, ELECTRIC DEVICE, METHOD FOR PREPARING BATTERY, AND DEVICE**

(30) Priority: 12.10.2021 CN 202111188271
(71) Applicant: Contemporary Amperex Technology Co., Limited, Jiaocheng District Ningde Fujian 352100 (CN)
(72) Inventor: XU, Hu, Ningde, Fujian 352100 (CN); JIN, Haizu, Ningde, Fujian 352100 (CN); LI, Xing, Ningde, Fujian 352100 (CN); NIU, Shaojun, Ningde, Fujian 352100 (CN)
(74) Representative: Gong, Jinping
(86) International application number: PCT/CN2021/132849
(87) International publication number: WO 2023/060713

(57) **Abstract**

Embodiments of this application provide a battery cell, a battery, an electric device, and a method and device for manufacturing battery. The battery cell includes a first electrode assembly and a second electrode assembly, where the first electrode assembly and the second electrode assembly differ in size and/or capacity so as to fit a structure of the battery cell. The foregoing technical solution can improve space utilization of batteries, thereby improving the performance of batteries.

## Description

### CROSS-REFERENCE TO RELATED APPLICATIONS

This application claims priority to Chinese Patent Application No. 202111188271.0, filed on October 12, 2021 and entitled "BATTERY CELL, BATTERY, AND ELECTRIC APPARATUS", which is incorporated herein by reference in its entirety.

### TECHNICAL FIELD

This application relates to the field of battery technologies, and more specifically, to a battery cell, a battery, an electric device, and a method and device for manufacturing battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

Space utilization of batteries has a significant influence on performance of batteries such as battery capacity, energy density, and structural strength. Therefore, how the space utilization of batteries is improved to improve the performance of batteries is an urgent technical problem to be resolved in battery technology.

### SUMMARY

This application provides a battery cell, a battery, an electric device, and a method and device for manufacturing battery, which can improve space utilization of batteries, thereby improving the performance of batteries.

According to a first aspect, a battery cell is provided. The battery cell includes a first electrode assembly and a second electrode assembly, where the first electrode assembly and the second electrode assembly differ in size and/or capacity so as to fit a structure of the battery cell.

On the basis of the technical solution of embodiments of this application, when multiple electrode assemblies are disposed in a battery cell, the multiple electrode assemblies may differ in dimension, structure, shape, or capacity. Correspondingly, the battery cell can be flexibly designed in shape based on actual needs. Therefore, the battery cell does not have to be designed as a regular prismatic battery cell, or multiple battery cells do not need to be designed in a uniform shape and with a same capacity. Further, the battery cell can be flexibly designed in shape so that batteries formed by packaging such battery cells can have more flexible space usage, improving the space utilization of the batteries, thereby improving the performance of the batteries.

In some possible implementations, the first electrode assembly and the second electrode assembly are made of different materials.

The material and size of the electrode assembly affect the capacity of the electrode assembly. In the embodiments of this application, the first electrode assembly and the second electrode assembly are made of different materials. If the two electrode assemblies need to have a same capacity, the first electrode assembly and the second electrode assembly may be designed with different sizes. Thus, when the battery cell is designed in an irregular shape or an unusual regular shape based on actual needs, the electrode assemblies at different positions in the battery cell are configured to be made of different materials by fully using a design characteristic that electrode assemblies having a same capacity but made of different materials require different spaces, so that different electrode assemblies have the same capacity.

In some possible implementations, the first electrode assembly or the second electrode assembly contains one of lithium cobaltate, lithium iron phosphate, ternary lithium, or lithium manganate as an active material, and the active material in the first electrode assembly differs from the active material in the second electrode assembly.

In some possible implementations, the first electrode assembly or the second electrode assembly is any one of the following structures: a cylindrical wound structure, an elliptic wound structure, or a laminated structure.

In the embodiments of this application, the first electrode assembly and the second electrode assembly may be the same or different in structure. If the two electrode assemblies are the same in structure, the electrode assemblies can be manufactured by using a same process, thereby simplifying a technological process. If the two electrode assemblies are different in structure, sizes of the electrode assemblies can be reasonably designed by using the characteristic that electrode assemblies of different structures require different spaces, so as to make full use of an internal space of a battery cell, improving space utilization in the battery cell, thereby increasing the energy density of the battery cell.

In some possible implementations, the battery cell is of a polyhedral structure. The battery cell includes a first wall and a second wall connected to each other, the first wall being the largest wall of the battery cell, where the first wall is disposed perpendicular to a first direction, the second wall is inclined with respect to the first wall, and a cross section of the battery cell on a plane perpendicular to the first wall and the second wall is a trapezoid.

The electrode assemblies in the battery cell may differ in size and/or capacity so that the battery cell may be designed as a polyhedral structure with a trapezoidal cross section based on actual needs. The battery cell of a polyhedral structure is relatively stable and also convenient to process, assemble and arrange, thereby improving assembly efficiency of batteries.

In some possible implementations, the first electrode assembly and the second electrode assembly are of elliptic wound structures, the first electrode assembly and the second electrode assembly are stacked along the first direction, and the first electrode assembly is close to the first wall, where width of the first electrode assembly along a second direction is greater than width of the second electrode assembly along the second direction, and the second direction is perpendicular to the first direction.

In the embodiments of this application, the first wall is the largest wall of the battery cell. Therefore, in the battery cell, a space closer to the first wall is larger. In the embodiments of this application, the first electrode assembly and the second electrode assembly have different width parameters in the second direction, where the electrode assembly closer to the first wall may be provided with a greater width so that the internal space of the battery cell can be fully used, thereby improving the space utilization in the battery cell. Correspondingly, the energy density of the battery cell and the energy density of a battery formed by packaging the battery cell can be increased.

In some possible implementations, when the first electrode assembly and the second electrode assembly are made of a same material, thickness of the first electrode assembly along the first direction is less than or equal to thickness of the second electrode assembly along the first direction. Alternatively, when the first electrode assembly and the second electrode assembly are made of different materials, thickness of the first electrode assembly along the first direction is less than or equal to thickness of the second electrode assembly along the first direction.

In the embodiments of this application, when the first electrode assembly and the second electrode assembly are made of a same material, the two electrode assemblies differ in both width and thickness, thereby easily satisfying the requirement that the first electrode assembly and the second electrode assembly have a same capacity.

In the embodiments of this application, when the first electrode assembly and the second electrode assembly are made of different materials, the two electrode assemblies are different in width and may be different or the same in thickness, thereby easily satisfying the requirement that the first electrode assembly and the second electrode assembly have a same capacity.

In some possible implementations, the first electrode assembly and the second electrode assembly are of laminated structures; and the first electrode assembly is close to the first wall. The first electrode assembly includes a first anode electrode plate and a first cathode electrode plate separated by a first separator; the second electrode assembly includes a second anode electrode plate and a second cathode electrode plate separated by a second separator; and the first anode electrode plate and the second cathode electrode plate face each other and are separated by a third separator; where the second anode electrode plate, the second separator, the second cathode electrode plate, the third separator, the first anode electrode plate, the first separator, and the first cathode electrode plate are stacked in sequence along the first direction, and have progressively increased widths in the second direction, the second direction being perpendicular to the first direction.

In the embodiments of this application, the first wall is the largest wall of the battery cell. Therefore, in the battery cell, a space closer to the first wall is larger. In the embodiments of this application, the first electrode assembly and the second electrode assembly are both of laminated structures. Laminates on all layers have different width parameters in the second direction, where the laminate closer to the first wall may be provided with a greater width so that the internal space of the battery cell can be fully used, thereby improving the space utilization in the battery cell. Correspondingly, the energy density of the battery cell and the energy density of a battery formed by packaging the battery cell can be increased.

In some possible implementations, the battery cell further includes a third wall connected to the first wall. The third wall and the second wall are disposed opposite each other. A plane on which edges, facing the second wall, of the second anode electrode plate, the second separator, the second cathode electrode plate, the third separator, the first anode electrode plate, the first separator, and the first cathode electrode plate are located is parallel to the second wall. A plane on which edges, facing the third wall, of the second anode electrode plate, the second separator, the second cathode electrode plate, the third separator, the first anode electrode plate, the first separator, and the first cathode electrode plate are located is parallel to the third wall.

The width of each laminate in the battery cell may change with an arrangement direction of the second wall and the third wall with respect to the first wall. For example, two ends of each laminate in the second direction may be in direct contact with or have a small reserved gap between them and the second wall and the third wall, respectively. In this case, the internal space of the battery cell can be fully used.

In some possible implementations, the battery cell further includes a first electrode terminal and a second electrode terminal, where the first electrode terminal and the second electrode terminal are disposed on two different walls of the battery cell.

In this way, during packaging of multiple battery cells, fewer busbars can be used, and no space needs to be reserved for the busbars, thereby facilitating electrical connection between the multiple battery cells.

In some possible implementations, the battery cell further includes a fifth wall and a sixth wall disposed opposite each other. The fifth wall is connected to the first wall and the second wall. The sixth wall is connected to the first wall and the second wall. The first electrode terminal is disposed on the fifth wall, and the second electrode terminal is disposed on the sixth wall.

In some possible implementations, the battery cell further includes a first electrode terminal and a second electrode terminal, where the first electrode terminal and the second electrode terminal are disposed on a same wall of the battery cell.

In some possible implementations, the first electrode terminal and the second electrode terminal are disposed on a wall connected to both the first wall and the second wall on the battery cell.

According to a second aspect, a battery is provided. The battery includes a box, and multiple rows of battery cells that are accommodated in the box, where the battery cell is the battery cell according to the first aspect or any one of the possible implementations in the first aspect. The battery cell is of a polyhedral structure. The battery cell includes a first wall and a second wall connected to each other, the first wall being the largest wall of the battery cell, where the first wall is disposed perpendicular to a first direction, the second wall is inclined with respect to the first wall, and a cross section of the battery cell on a plane perpendicular to the first wall and the second wall is a trapezoid. The multiple rows of battery cells are arranged along a second direction, the second direction being perpendicular to the first direction, and the first direction being parallel to the direction of gravity, where the multiple rows of battery cells include a first row of battery cells and a second row of battery cells disposed adjacent to each other along the second direction, and the first row of battery cells and the second row of battery cells are attached to each other through the second walls, so as to form interaction forces in the first direction between the first row of battery cells and the second row of battery cells.

In this embodiment of this application, during use of the first row of battery cells and the second row of battery cells, interaction forces may be generated in the direction of gravity when the battery is under vibration impact, and accordingly interaction forces in the first direction are generated, or the battery cells may swell and deform during charge and discharge, and thus interaction forces in the first direction are generated. Therefore, the first row of battery cells and the second row of battery cells may experience part of the interaction forces in the first direction through the second walls, so as to reduce impact of the interaction forces on the first row of battery cells and the second row of battery cells, for example, the deformation of the battery cells, especially the deformation in the first direction. Generally, reducing the deformation in a battery cell can enhance the stiffness and strength of the overall battery, thereby preventing safety risks caused by vibration impact and the like during use of the battery. In addition, the multiple rows of battery cells disposed in the battery cooperate with one another to improve the space utilization in the box of the battery, thereby increasing the energy density of the battery.

In some possible implementations, the battery cell further includes a third wall connected to the first wall, and the third wall and the second wall are disposed opposite each other and unparallel to each other. The multiple rows of battery cells further include a third row of battery cells; the third row of battery cells and the second row of battery cells are disposed adjacent to each other along the second direction; and the third row of battery cells and the second row of battery cells are attached to each other through the third walls.

In this embodiment of this application, the first row of battery cells and the second row of battery cells are attached to each other through the second walls; and the third row of battery cells and the second row of battery cells are attached to each other through the third walls. The multiple rows of battery cells are disposed in the box in a manner of cooperating with one another to improve the space utilization in the box, thereby increasing the energy density of the battery.

In some possible implementations, the third wall is disposed perpendicularly or inclined with respect to the first wall.

Considering that the box is usually a cuboid, when the third wall is disposed perpendicular to the first wall, the third wall of the battery cell close to an inner wall of the box may be disposed facing the inner wall of the box, facilitating installation, thereby improving the assembly efficiency of the battery. In addition, the multiple rows of battery cells can form a regular cuboid after being arranged and combined, so as to fit the cuboid box. The internal space of the box is fully used so that the space utilization in the box can be improved, and thus the energy density of the battery is increased.

When the third wall is inclined with respect to the first wall, every two adjacent rows of battery cells in the multiple rows of battery cells restrict and constrain each other, enhancing the stiffness and strength of the overall battery, thereby preventing safety risks caused by vibration impact and the like during use of the battery.

In some possible implementations, when the third wall is inclined with respect to the first wall, an included angle between the third wall and the first wall is equal to an included angle between the second wall and the first wall.

In some possible implementations, an included angle between the second wall and the first wall is greater than or equal to 30° and less than 90°; and/or an included angle between the third wall and the first wall is greater than or equal to 30° and less than 150°.

With a proper inclination angle set, the internal space of the battery cell can be fully used without increasing the size design difficulty of the electrode assembly in the battery cell.

In some possible implementations, the box includes a first box inner wall, and the first box inner wall is perpendicular to the first wall and parallel to the third wall, where the third wall is disposed perpendicular to the first wall.

The first box inner wall may be in direct contact with the battery cell without an end plate being provided, not only facilitating assembly but also reducing the internal space of the box, thereby increasing the energy density of the battery.

In some possible implementations, the battery cell further includes a fourth wall parallel to the first wall, and the fourth wall is connected to the second wall. The battery cells in each of the multiple rows of battery cells are stacked along the first direction; and in each row of the battery cells, the adjacent battery cells are attached to each other through the first walls and/or the fourth walls.

In each row of the battery cells, adjacent two of the battery cells may be attached to each other through parallel walls, facilitating arrangement and combination of the battery cells, thereby improving the assembly efficiency of the battery.

In some possible implementations, in each row of the battery cells, projections of the first walls of any two of the battery cells along the first direction overlap.

In some possible implementations, the battery cell further includes a third wall connected to the first wall, and the third wall and the second wall are disposed opposite each other. The battery cells in each of the multiple rows of battery cells are stacked along the first direction; and in each row of the battery cells, the third walls of any two of the battery cells are on a same plane.

In an actual design, the box inner wall may be inclined at an angle. When the multiple rows of battery cells are installed in the box, the battery cells can well fit the box inner wall. In addition, the box inner wall is in surface contact with the battery cells, not only making full use of the internal space of the box but also restricting the battery cells by virtue of the box inner wall.

In some possible implementations, the battery includes N rows of battery cells, and each of the N rows of battery cells includes M battery cells, where N and M are positive integers greater than 1 and N is greater than or equal to M.

In some possible implementations, separation parts perpendicular to the first direction are provided between the multiple rows of battery cells, where the separation part is at least one of the following structures: a cross beam, a thermal management part, and a structural adhesive.

The separation part may include a cross beam, where the cross beam can support multiple battery cells, so as to enhance the strength of the box, thereby enhancing the strength and stability of the battery.

The separation part may further include a thermal management part. That is, the separation part can accommodate a fluid for regulating temperature of the multiple battery cells.

The separation part may further include a structural adhesive by which the multiple battery cells in direct contact with the separation part can be relatively fixed to the separation part. Especially, when the largest walls of the multiple battery cells are disposed on a surface of the structural adhesive, the stability of the battery cells can be greatly improved, and thus the strength and stability of the battery are improved.

In some possible implementations, dimension of the battery cell satisfies at least one of the following conditions: thickness T of the battery cell in the first direction satisfying 6 mm ≤T≤150 mm; and length W of the battery cell in a third direction satisfying 100 mm≤W≤1200 mm.

According to a third aspect, an electric device is provided. The electric device includes the battery according to the second aspect or any one of the possible implementations in the second aspect, where the battery is configured to provide electric energy for the electric device.

According to a fourth aspect, a method for manufacturing battery is provided. The method includes: providing a box; and providing multiple rows of battery cells, where the battery cell is of a polyhedral structure. The battery cell includes a first electrode assembly and a second electrode assembly, where the first electrode assembly and the second electrode assembly differ in size and/or capacity so as to fit a structure of the battery cell. The battery cell includes a first wall and a second wall connected to each other, the first wall being the largest wall of the battery cell, where the first wall is disposed perpendicular to a first direction, the second wall is inclined with respect to the first wall, and a cross section of the battery cell on a plane perpendicular to the first wall and the second wall is a trapezoid. The multiple rows of battery cells are arranged along a second direction, the second direction being perpendicular to the first direction, and the first direction being parallel to the direction of gravity, where the multiple rows of battery cells include a first row of battery cells and a second row of battery cells disposed adjacent to each other along the second direction, and the first row of battery cells and the second row of battery cells are attached to each other through the second walls, so as to form interaction forces in the first direction between the first row of battery cells and the second row of battery cells. The multiple rows of battery cells are accommodated in the box.

According to a fifth aspect, a device for manufacturing battery is provided. The device includes: a providing module, configured to provide a box and provide multiple rows of battery cells, where the battery cell is of a polyhedral structure; the battery cell includes a first electrode assembly and a second electrode assembly; the first electrode assembly and the second electrode assembly differ in size and/or capacity so as to fit a structure of the battery cell; the battery cell includes a first wall and a second wall connected to each other, the first wall being the largest wall of the battery cell, where the first wall is disposed perpendicular to a first direction, the second wall is inclined with respect to the first wall, and a cross section of the battery cell on a plane perpendicular to the first wall and the second wall is a trapezoid; the multiple rows of battery cells are arranged along a second direction, the second direction being perpendicular to the first direction, and the first direction being parallel to the direction of gravity, where the multiple rows of battery cells include a first row of battery cells and a second row of battery cells disposed adjacent to each other along the second direction, and the first row of battery cells and the second row of battery cells are attached to each other through the second walls, so as to form interaction forces in the first direction between the first row of battery cells and the second row of battery cells; and a mounting module, configured to accommodate the multiple rows of battery cells in the box.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural exploded view of a battery according to an embodiment of this application;
FIG. 3 and FIG. 4 are schematic structural diagrams of a battery cell according to an embodiment of this application;
FIG. 5 is a schematic diagram of a cross section of a battery cell according to an embodiment of this application;
FIG. 6 to FIG. 8 are schematic structural diagrams of an electrode assembly in a battery cell according to an embodiment of this application;
FIG. 9 is a schematic three-dimensional diagram of a battery cell according to an embodiment of this application;
FIG. 10 is a schematic structural diagram of a battery according to an embodiment of this application;
FIG. 11 is a schematic top view and cross-sectional view of a battery according to an embodiment of this application;
FIG. 12 is a schematic cross-sectional view of a battery according to an embodiment of this application;
FIG. 13 and FIG. 14 are schematic diagrams of a partial structure of a battery according to an embodiment of this application;
FIG. 15 is a schematic diagram of a dimension of a battery cell according to an embodiment of this application;
FIG. 16 is a schematic diagram of a cross section of a battery according to an embodiment of this application;
FIG. 17 is a schematic flowchart of a method for manufacturing battery according to an embodiment of this application; and
FIG. 18 is a schematic block diagram of a device for manufacturing battery according to an embodiment of this application.

The accompanying drawings are not drawn to an actual scale.

Reference signs are described as follows:
1. vehicle; 10. battery; 11. box; 111. first portion; 112. second portion; 20. battery cell; 20a. first row of battery cells; 20b. second row of battery cells; 20c. third row of battery cells; 201. first wall; 202. second wall; 203. third wall; 204. fourth wall; 205. fifth wall; 206. sixth wall; 21. battery box; 211. housing body; 212. cover plate; 213. pressure relief mechanism; 214. electrode terminal; 214a. positive electrode terminal; 214b. negative electrode terminal; 2141. first electrode terminal; 2142. second electrode terminal; 215. bottom wall; 22. electrode assembly; 221. first electrode assembly; 221a. first anode electrode plate; 221b. first separator; 221c. first cathode electrode plate; 221d. third separator; 222. second electrode assembly; 222a. second anode electrode plate; 222b. second separator; 222c. second cathode electrode plate; 22a. first tab; 22b. second tab; 23. connecting member; 24. base plate; 25. separation part; 30. controller; and 40. motor.

### DESCRIPTION OF EMBODIMENTS

The following further describes implementations of this application in detail with reference to accompanying drawings and embodiments. The detailed description of the following embodiments and the accompanying drawings are used to exemplarily describe the principle of this application, but cannot be used to limit the scope of this application, that is, this application is not limited to the described embodiments.

In the descriptions of this application, it should be noted that, unless otherwise stated, "multiple" means two or more; and the orientations or positional relationships indicated by the terms "upper", "lower", "left", "right", "inside", "outside", and the like are merely intended to help the descriptions of this application and simplify the descriptions rather than to indicate or imply that the apparatuses or components must have specific orientations, or be constructed and manipulated in specific orientations, and therefore shall not be construed as limitations on this application. In addition, the terms "first", "second", and "third" are merely intended for a purpose of description, and shall not be understood as an indication or implication of relative importance. "Perpendicular" means being perpendicular with an allowable range of error other than being strictly perpendicular. "Parallel" means being parallel with an allowable range of error other than being strictly parallel.

The orientation terms appearing in the following description all are directions shown in the figures, and do not limit the specific structure of this application. In the descriptions of this application, it should be further noted that unless otherwise specified and defined explicitly, the terms "installation", "link", and "connection" should be understood in their general senses. For example, the terms may be a fixed connection, a detachable connection, or an integrated connection, or may be a direct connection, or an indirect connection through an intermediate medium. Persons of ordinary skill in the art can understand specific meanings of these terms in this application based on specific situations.

The term "and/or" in this application is merely an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art can clearly and implicitly understand that the embodiments described in this application can be combined with other embodiments.

"Multiple" mentioned in this application means more than two (inclusive). Similarly, "multiple groups" means more than two (inclusive) groups, "multiple pieces" means more than two (inclusive) pieces, and "multiple rows" means more than two (inclusive) rows.

In this application, a battery is a physical module that includes one or more battery cells to supply electric energy. For example, the battery mentioned in this application may include a battery module, a battery pack, or the like. A battery typically includes a box configured to enclose one or more battery cells. The box can prevent liquids or other foreign matters from affecting charging or discharging of the battery cell.

Optionally, the battery cell may include a lithium-ion secondary battery, a lithium-ion primary battery, a lithium-sulfur battery, a sodium/lithium-ion battery, a sodium-ion battery, a magnesium-ion battery, or the like. This is not limited in the embodiments of this application. In some embodiments, the battery cell may also be referred to as a battery core.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The separator may be made of polypropylene (polypropylene, PP), polyethylene (polyethylene, PE), or the like. In addition, the electrode assembly may be of a wound structure or a laminated structure, but the embodiments of this application are not limited thereto.

The box of the battery in the embodiments of this application is configured to accommodate multiple battery cells, busbars, and other components of the battery. In some embodiments, a structure for fixing the battery cells may also be provided in the box. A shape of the box may be determined according to the multiple battery cells accommodated. In some embodiments, the box may be square with six walls.

The busbar mentioned in this application is configured to implement electrical connection between the multiple battery cells, for example, in parallel, in series, or in hybrid connection. The busbar may enable the electrical connection between the battery cells by connecting the electrode terminals of the battery cells. In some embodiments, the busbar may be fixed to the electrode terminals of battery cells by welding. The busbar transmits voltage of the battery cell. Multiple battery cells will get a relatively high voltage after being connected in series. Correspondingly, electrical connection formed by the busbar may also be referred to as "high-voltage connection".

In some battery packaging technologies, multiple battery cells (cell) may be integrated as a battery module (module) first, and then the battery module is installed in the box of the battery to form a battery pack (pack). In some other battery packaging technologies, multiple battery cells may be directly installed in the box of the battery to form a battery pack. This battery packaging technology may also be referred to as a cell to pack (cell to pack, CTP) packaging technology. In the CTP packaging technology, without an intermediate form of a battery module, the weight of the battery pack can be reduced and the energy density of the battery can be increased. In other words, in a battery packaging process, the multiple battery cells can be directly combined into a battery, or the battery cells may be first combined into battery modules, and then the battery modules are combined into a battery. The battery is then disposed in an electric device to provide electric energy for the electric device.

For the development of battery technologies, various design factors need to be considered, for example, performance parameters such as energy density, cycle life, discharge capacity, and charge and discharge rate. Energy density (energy density) refers to an amount of energy stored in a specified space or a specified mass of substance. Typically, larger energy density of the battery means more electric quantity stored in unit volume or weight. When the battery has a specified internal space, improving its space utilization is an effective way for increasing its energy density.

In battery packaging technology, battery cells are typically conventional prismatic battery cells, and multiple battery cells in a battery pack are uniform in type and dimension. Although prismatic battery cells uniform in dimension facilitate unified packaging, a single type of the battery cells may cause inflexible space usage of the battery, affecting further improvement of the space utilization of the battery.

In view of this, this application provides a battery cell. The battery cell includes a first electrode assembly and a second electrode assembly, where the first electrode assembly and the second electrode assembly differ in size and/or capacity so as to fit a structure of the battery cell. Thus, when multiple electrode assemblies are disposed in the battery cell, the multiple electrode assemblies may differ in size, structure, shape, or capacity. Correspondingly, the battery cell can be flexibly designed in shape based on actual needs. Therefore, the battery cell does not have to be designed as a regular prismatic battery cell, or multiple battery cells do not need to be designed in a uniform shape and with a same capacity. Further, the battery cell can be flexibly designed in shape so that batteries formed by packaging such battery cells can have more flexible space usage, improving the space utilization of the batteries, thereby improving the performance of the batteries.

The technical solutions described in the embodiments of this application are applicable to various devices using batteries, such as mobile phones, portable devices, notebook computers, electric bicycles, electric toys, electric tools, electric vehicles, ships, and spacecraft. For example, the spacecraft includes planes, rockets, space shuttles, spaceships, and the like.

It should be understood that the technical solutions described in the embodiments of this application are not only applicable to the devices described above, but also applicable to all devices using batteries. However, for brevity of description, electric vehicles are used as an example for description in the following embodiments.

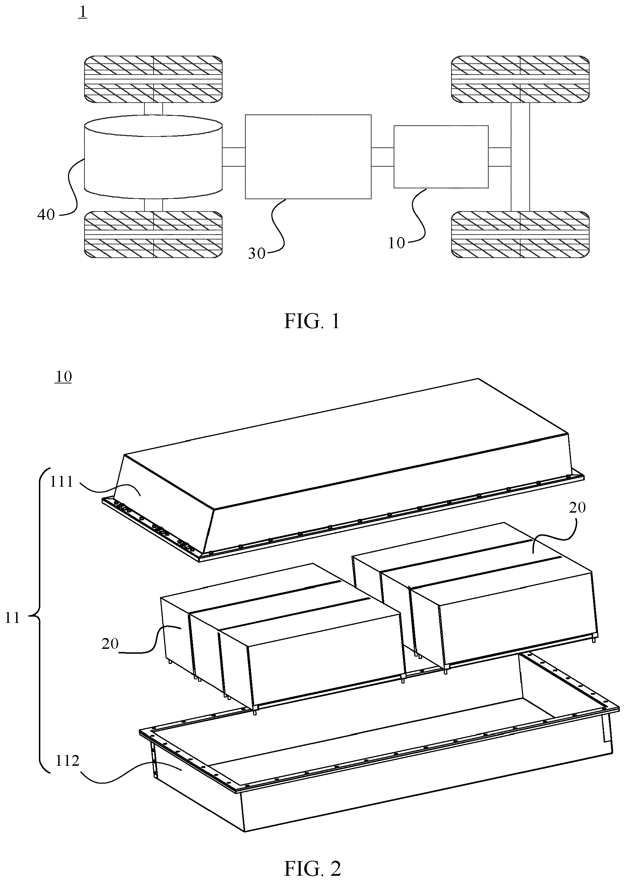

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided in the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 and applied to a circuit system of the vehicle 1. For example, the battery 10 is configured to meet power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where series-parallel connection means a combination of series and parallel connections. The battery may also be referred to as a battery pack. Optionally, multiple battery cells may be connected in series, parallel, or series-parallel to form battery modules first, and then multiple battery modules are connected in series, parallel, or series-parallel to form a battery. In other words, the multiple battery cells may be directly combined into a battery, or may first be combined into battery modules, and then the battery modules are combined into a battery.

For example, FIG. 2 is a schematic structural diagram of a battery 10 according to an embodiment of this application. The battery 10 may include multiple battery cells 20. The battery 10 may further include a box (or referred to as a cover body) 11 that has a hollow structure inside, and the multiple battery cells 20 are accommodated in the box 11. For example, referring to FIG. 2, the box 11 may include two portions that are referred to herein as a first portion 111 and a second portion 112 respectively. The first portion 111 and the second portion 112 are snap-fitted together to form an accommodating space for accommodating the multiple battery cells 20. Shapes of the first portion 111 and the second portion 112 may be determined depending on a shape formed by combining multiple battery cells 20. Each of the first portion 111 and the second portion 112 may have an opening. For example, the first portion 111 and the second portion 112 may each be a hollow cuboid and each have only one open surface. The opening of the first portion 111 and the opening of the second portion 112 are disposed oppositely, and the first portion 111 and the second portion 112 are snap-fitted to form the box with a closed cavity. The multiple battery cells 20 are connected in parallel, series, or series-parallel, and then placed into the box formed by the first portion 111 and the second portion 112 that are snap-fitted.

Optionally, in an implementation, multiple battery cells (cell) 20 may be first integrated as at least one battery module (module), and then the battery module is installed in the box 11 to form a battery pack (pack) form. In this implementation, an auxiliary structural member such as a cross beam may be provided between the battery modules, so as to improve installation stability of the battery modules in the box 11.

Optionally, in another implementation, multiple battery cells 20 may also be directly connected and installed in the box 11 to form a battery pack form. Without an intermediate form of a battery module, there is no need to provide an auxiliary member such as a cross beam in the box 11, thus reducing the weight of the battery 10 and increasing the energy density of the battery 10. This implementation may also be referred to as a cell to pack (cell to pack, CTP) installation technology in related technologies.

Optionally, in still another implementation, the box 11 may be integrated into an electric device in which the battery 10 is located. In other words, the box 11 may be integrally formed with a structural member in the electric device. After being interconnected, the multiple battery cells 20 may be directly installed in the box 11 of the electric device. In an example, the box 11 may be integrated into a local area of a chassis of the vehicle 1, and the multiple battery cells 20 may be directly installed at the chassis of the vehicle 1 after being interconnected. This implementation may also be referred to as a cell to chassis (cell to chassis, CTC) installation technology in related technologies.

Optionally, the battery 10 may further include other structures. Details are not described herein. For example, the battery 10 may further include a busbar that is used to implement electrical connection between the multiple battery cells 20, for example, electrical connection in parallel, series, or series-parallel. Specifically, the busbar may enable the electrical connection between the battery cells 20 by connecting the electrode terminals of the battery cells 20. Further, the busbar may be fixed to the electrode terminals of the battery cells 20 by welding. Electrical energy of the multiple battery cells 20 may be further led out by a conductive mechanism passing through the box 11. Optionally, the conductive mechanism may also belong to the busbar.

According to different requirements for electricity, the battery cell 20 may be provided in any quantity. The multiple battery cells 20 may be connected in series, parallel, or series-parallel to achieve a greater capacity or power.

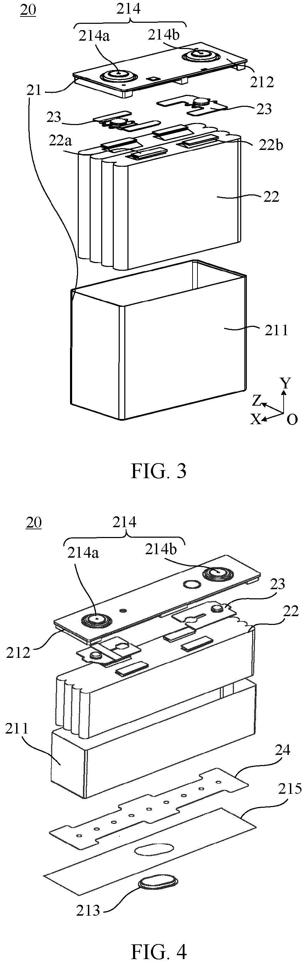

FIG. 3 is a schematic structural diagram of a battery cell 20 according to an embodiment of this application. The battery cell 20 may include a battery box 21 and one or more electrode assemblies 22 accommodated in the battery box 21. In some embodiments, the battery box 21 may also be referred to as a housing.

Referring to FIG. 3, the battery box 21 may include a housing body 211 and a cover plate 212. A wall of the housing body 211 and the cover plate 212 each are referred to as a wall of the battery cell 20. A shape of the housing body 211 is determined depending on a shape formed after combining the one or more electrode assemblies 22. At least one surface of the housing body 211 has an opening to allow the one or more electrode assemblies 22 to be placed into the housing body 211. The cover plate 212 covers the opening and is connected to the housing body 211 to form a closed cavity for placing the electrode assembly 22. The housing body 211 is filled with an electrolyte, for example, a liquid electrolyte.

Optionally, in an implementation, as shown in FIG. 3, one surface of the housing body 211 has an opening, and the cover plate 212 covers the opening and is connected to the housing body 211. In another implementation, two opposite surfaces of the housing body 211 each have an opening. The cover plate 212 may include a first cover plate and a second cover plate. The first cover plate and the second cover plate respectively cover the openings in the two surfaces and are connected to the housing body 211.

The battery cell 20 may further include two electrode terminals 214. Optionally, as shown in FIG. 3, the two electrode terminals 214 may be disposed on the same cover plate 212. Alternatively, in some other embodiments, the two electrode terminals 214 may be disposed on two cover plates respectively, for example, the first cover plate and the second cover plate. This is not limited in the embodiments of this application.

The cover plate 212 is generally a flat plate, and the two electrode terminals 214 are fixed on a flat surface of the cover plate 212. The two electrode terminals 214 are a positive electrode terminal 214a and a negative electrode terminal 214b, respectively. Each electrode terminal 214 is correspondingly provided with a connecting member 23 or a current collecting member 23, and the connecting member 23 or current collecting member 23 is located between the cover plate 212 and the electrode assembly 22 to electrically connect the electrode assembly 22 and the electrode terminal 214.

As shown in FIG. 3, in the battery cell 20, each electrode assembly 22 has a first tab 22a and a second tab 22b. The first tab 22a and the second tab 22b are opposite in polarity. For example, when the first tab 22a is a positive tab, the second tab 22b is a negative tab. The first tabs 22a of the one or more electrode assemblies 22 are connected to one electrode terminal through one connecting member 23, and the second tabs 22b of the one or more electrode assemblies 22 are connected to the other electrode terminal through the other connecting member 23. For example, the positive electrode terminal 214a is connected to the positive tab through one connecting member 23, and the negative electrode terminal 214b is connected to the negative tab through the other connecting member 23.

In the battery cell 20, the number of the electrode assembly 22 may be flexibly set based on actual use requirements. As shown in FIG. 3, four separate electrode assemblies 22 are provided in the battery cell 20.

In an example, as shown in FIG. 4, a pressure relief mechanism 213 may also be provided on a wall of the battery cell 20. The pressure relief mechanism 213 is configured to be actuated to relieve internal pressure or temperature when the internal pressure or temperature of the battery cell 20 reaches a threshold.

Optionally, in an embodiment of this application, the pressure relief mechanism 213 and the electrode terminal 214 may be disposed on a same wall of the battery cell 20. In an example, the electrode terminal 214 and the pressure relief mechanism 213 may both be disposed on a top wall of the battery cell 20, that is, the cover plate 212.

The pressure relief mechanism 213 and the electrode terminal 214 being disposed on the same wall of the battery cell 20, for example, on the cover plate 212 of the battery cell 20, can facilitate the processing and installation of the pressure relief mechanism 213 and the electrode terminal 214, and is conducive to improving the production efficiency of the battery 10.

Optionally, in other embodiments of this application, the pressure relief mechanism 213 and the electrode terminal 214 may also be disposed on different walls of the battery cell 20. As shown in FIG. 4, the electrode terminal 214 is disposed on the top wall of the battery cell 20, that is, the cover plate 212, and the pressure relief mechanism 213 is disposed on a bottom wall 215 opposite the top wall. Alternatively, the two electrode terminals 214 are respectively disposed on the top wall 212 and the bottom wall 215 of the battery cell 20, while the pressure relief mechanism 213 is disposed on another wall other than the top wall 212 and the bottom wall 215 in the housing 21. Optionally, the top wall 212 and the bottom wall 215 referred to herein may also serve as two cover plates of the battery cell 20.

The pressure relief mechanism 213 and the electrode terminal 214 are disposed on different walls of the battery cell 20 so that when the pressure relief mechanism 213 is actuated, emissions from the battery cell 20 are further away from the electrode terminal 214, thereby reducing the influence of the emissions on the electrode terminal 214 and the busbar, and accordingly improving the safety of the battery. Further, when the electrode terminal 214 is disposed on the cover plate 212 of the battery cell 20, the pressure relief mechanism 213 is disposed on the bottom wall of the battery cell 20 so that when the pressure relief mechanism 213 is actuated, emissions from the battery cell 20 are discharged to the bottom of the battery 10. In this way, dangerousness of the emissions can be reduced by using a thermal management part and the like at the bottom of the battery 10, and the bottom of the battery 10 is usually far away from a user, thereby reducing harm to the user.

The pressure relief mechanism 213 may be a part of the wall on which it is located, or may be a separate structure from the wall on which it is located, and may be fixed to the wall on which it is located in a manner such as welding. For example, in the embodiment shown in FIG. 4, when the pressure relief mechanism 213 is a part of the bottom wall 215, the pressure relief mechanism 213 may be formed by providing indentation on the bottom wall 215. Thickness of the bottom wall 215 corresponding to the indentation is less than thickness of another region other than the indentation in the pressure relief mechanism 213. The indentation is the weakest portion of the pressure relief mechanism 213. When an internal pressure of the housing body 211 rises and reaches a threshold due to too much gas produced by the battery cell 20, or when an internal temperature of the battery cell 20 rises and reaches a threshold due to heat produced by internal reactions of the battery cell 20, the pressure relief mechanism 213 may break at the indentation, causing the inside and the outside of the housing body 211 to be communicated and the gas pressure and temperature to be released out through the breakage of the pressure relief mechanism 213, thereby preventing the battery cell 20 from exploding.

In addition, the pressure relief mechanism 213 may be a variety of possible pressure relief mechanisms. This is not limited in this embodiment of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal gas pressure of the battery cell 20 provided with the pressure relief mechanism 213 reaches the threshold.

In some embodiments, as shown in FIG. 4, the battery cell 20 may further include a base plate 24. The base plate 24 is located between the electrode assembly 22 and the bottom wall of the housing body 211, can support the electrode assembly 22, and can also effectively prevent interference between the electrode assembly 22 and rounded corners at four sides of the bottom wall of the housing body 211. In addition, the base plate 24 may be provided with one or more through holes. For example, multiple uniformly-arranged through holes may be provided. Alternatively, when the pressure relief mechanism 213 is disposed on the bottom wall 215 of the housing body 211, a through hole is provided in a position corresponding to the pressure relief mechanism 213, thus helping liquid guidance and gas guidance. Specifically, spaces in upper and lower surfaces of the base plate 24 can be communicated, and thus gas produced in the battery cell 20 and an electrolyte can both freely pass through the base plate 24.

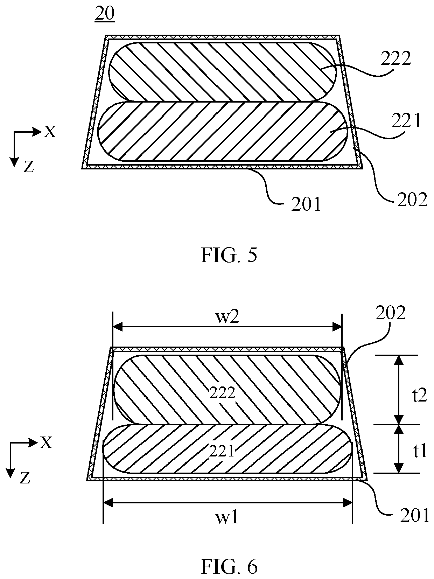

FIG. 5 is a schematic cross-sectional view of a battery cell according to an embodiment of this application. As shown in FIG. 5, the battery cell 20 includes a first electrode assembly 221 and a second electrode assembly 222. The first electrode assembly 221 and the second electrode assembly 222 differ in size and/or capacity so as to fit a structure of the battery cell 20.

In this embodiment of this application, the first electrode assembly 221 has one or more size parameters. The second electrode assembly 222 has one or more size parameters. The size parameters for describing a structure of the first electrode assembly 221 and the size parameters for describing a structure of the second electrode assembly 222 are different in at least one parameter (or value of the parameter), which may mean that the first electrode assembly 221 and the second electrode assembly 222 differ in size. Using the first electrode assembly as an example, the size parameters referred to herein include parameters (such as length, width, height, diameter, and the like) for describing an outline size of the first electrode assembly, and/or parameters (such as thickness of a plate, thickness of a separator, and the like) for describing sizes of parts included in the first electrode assembly.

In this embodiment of this application, the first electrode assembly 221 and the second electrode assembly 222 differ in capacity, which may be construed as that the first electrode assembly 221 and the second electrode assembly 222 differ in electric quantity stored. The capacity of the electrode assembly is related to multiple factors, for example, the size (including the outline size and sizes of internal parts) of the electrode assembly, compacted density, gram volume, percentage of an active substance, and other design parameters of the electrode assembly. When the first electrode assembly 221 and the second electrode assembly 222 have different values under at least one of the foregoing factors, they may have different capacities. The capacity of the electrode assembly may be measured in mAh (mAh) or Ah (Ah).

On the basis of the technical solution provided by this embodiment of this application, when multiple electrode assemblies are disposed in the battery cell 20, the multiple electrode assemblies may differ in size, structure, shape, or capacity. Correspondingly, the battery cell 20 can be flexibly designed in shape based on actual needs. Therefore, the battery cell does not have to be designed as a regular prismatic battery cell, or multiple battery cells do not need to be designed in a uniform shape and with a same capacity. Further, the battery cell 20 can be flexibly designed in shape so that batteries formed by packaging such battery cells can have more flexible space usage, improving the space utilization of the batteries, thereby improving the performance of the batteries.

In this embodiment of this application, the first electrode assembly 221 and the second electrode assembly 222 differing in size and/or capacity may include the following three conditions: (1) the first electrode assembly 221 and the second electrode assembly 222 being different in size and the same in capacity; (2) the first electrode assembly 221 and the second electrode assembly 222 being the same in size and different in capacity; and (3) the first electrode assembly 221 and the second electrode assembly 222 being different in both size and capacity. The following further describes the beneficial effects of the technical solution provided by this embodiment of this application based on specific conditions.

For condition (1), when the first electrode assembly 221 and the second electrode assembly 222 differ in size, they occupy different spaces in the battery cell 20. Therefore, when the battery cell 20 is designed as an irregular or asymmetric structure, electrode assemblies of different sizes may be provided in different spatial positions in the battery cell 20, so as to make full use of the internal space of the battery cell 20, thereby improving the space utilization in the battery cell. In addition, the first electrode assembly 221 and the second electrode assembly 222 may also be the same in capacity, thereby easily implementing series-parallel electrical connection of multiple electrode assemblies.

For example, the first electrode assembly 221 and the second electrode assembly 222 may be connected in series. In this way, current in the first electrode assembly 221 is the same as current in the second electrode assembly 222. The first electrode assembly 221 and the second electrode assembly 222 are also the same in capacity. Therefore, the first electrode assembly 221 and the second electrode assembly 222 are the same in charge/discharge rate (charge/discharge rate=current/capacity). In this way, the first electrode assembly 221 and the second electrode assembly 222 have synchronous attenuation in capacity retention rate so that high consistency is achieved, and the service life of the battery can be prolonged.

For condition (2), in a case that the battery cell 20 has a specified internal space, when the first electrode assembly 221 and the second electrode assembly 222 are the same in size and different in capacity, the capacity of the battery can be increased, and thus the energy density of the battery cell is increased. Correspondingly, the energy density of a battery formed by packaging the battery cell can be increased as well.

In some embodiments, the first electrode assembly 221 and the second electrode assembly 222 may be designed with different resistances. In this way, when the first electrode assembly 221 and the second electrode assembly 222 are connected in parallel, current in the first electrode assembly 221 differs from current in the second electrode assembly 222. The first electrode assembly 221 and the second electrode assembly 222 also differ in capacity. Therefore, the first electrode assembly 221 and the second electrode assembly 222 are likely to have a same charge/discharge rate. In this way, the first electrode assembly 221 and the second electrode assembly 222 have synchronous attenuation in capacity retention rate, so that high consistency is achieved, and the service life of the battery can be prolonged.

For condition (3), in a case that the first electrode assembly 221 and the second electrode assembly 222 are connected in parallel, when the first electrode assembly 221 and the second electrode assembly 222 are different in both size and capacity, the first electrode assembly 221 and the second electrode assembly 222 are likely to have a same charge/discharge rate. In this way, the first electrode assembly 221 and the second electrode assembly 222 have synchronous attenuation in capacity retention rate, so that high consistency is achieved, and the service life of the battery can be prolonged.

Optionally, in an implementation, the first electrode assembly 221 and the second electrode assembly 222 are made of different materials.

It can be learned from the foregoing descriptions that the electrode assembly includes a positive electrode plate, a negative electrode plate, and a separator. The positive electrode plate includes a positive electrode current collector and a positive electrode active substance layer. The negative electrode plate includes a negative electrode current collector and a negative electrode active substance layer. In this embodiment of this application, the first electrode assembly 221 and the second electrode assembly 222 being made of different materials may be construed as that at least one structure (or film layer) of the positive electrode current collector, the positive electrode active substance layer, the negative electrode current collector, the negative electrode active substance layer, and the separator included in the first electrode assembly 221 is made of a material different from a material of a corresponding structure (or film layer) included in the second electrode assembly 222.

In an example, the negative electrode active substance layer in the first electrode assembly 221 and the negative electrode active substance layer in the second electrode assembly 222 are made of different materials. For example, the two electrode assemblies use carbon and silicon as the negative electrode active substance layers, respectively.

In another example, the positive electrode active substance layer in the first electrode assembly 221 and the positive electrode active substance layer in the second electrode assembly 222 are made of different materials. For example, the first electrode assembly 221 contains one of lithium cobaltate, lithium iron phosphate, ternary lithium, or lithium manganate as an active material. The second electrode assembly 222 contains another one of the lithium cobaltate, the lithium iron phosphate, the ternary lithium, or the lithium manganate as an active material. To be specific, the active material in the first electrode assembly 221 differs from the active material in the second electrode assembly 222.

The material and size of the electrode assembly affect the capacity of the electrode assembly. In this embodiment of this application, when the first electrode assembly 221 and the second electrode assembly 222 are made of different materials, if the two electrode assemblies need to have a same capacity, the first electrode assembly 221 and the second electrode assembly 222 may be designed with different sizes. Thus, when the battery cell is designed in an irregular shape or an unusual regular shape based on actual needs, the electrode assemblies at different positions in the battery cell are configured to be made of different materials by fully using a design characteristic that electrode assemblies having a same capacity but made of different materials require different spaces, so that different electrode assemblies have the same capacity.

Certainly, when the first electrode assembly 221 and the second electrode assembly 222 are made of different materials, the first electrode assembly 221 and the second electrode assembly 222 may still have a same size. In this case, although the first electrode assembly 221 and the second electrode assembly 222 differ in capacity, they may also differ in resistance due to the influence of material, so that first electrode assembly 221 and the second electrode assembly 222 may have a same charge/discharge rate when being connected in parallel, thereby improving the performance of the battery.

Optionally, in another implementation, the first electrode assembly 221 and the second electrode assembly 222 are made of a same material.

In this embodiment of this application, when the first electrode assembly 221 and the second electrode assembly 222 are made of a same material, the first electrode assembly 221 and the second electrode assembly 222 may be designed with different sizes so as to have a same capacity. Thus, if the battery cell is designed in an irregular shape or an unusual regular shape based on actual needs, the electrode assembly can fit the structure of the battery cell by only changing the size design of the electrode assembly without changing the material of the electrode assembly, thereby reducing changes as few as possible or adjusting procedures of an existing electrode assembly manufacturing process, and facilitating implementation of the process.

Certainly, in this case, the first electrode assembly 221 and the second electrode assembly 222 may also differ in capacity. This can be specifically designed depending on actual needs, and is not limited in the embodiments of this application.

It should be noted that in other embodiments, the first electrode assembly 221 and the second electrode assembly 222 being made of different materials (or a same material) can be construed as that the first electrode assembly 221 and the second electrode assembly 222 belong to different systems (or a same system).

The electrode assembly may be usually formed by winding a positive electrode plate, a separator and a negative electrode plate by using a winding process, or formed by laminating a positive electrode plate, a separator and a negative electrode plate by using a laminating process. Therefore, the electrode assembly may be of a wound structure or a laminated structure. In an electrode assembly of a wound structure, the positive electrode plate, the negative electrode plate and the separator may be wound to form various shapes, for example, a cylindrical shape, an elliptic columnar shape, and the like. In an electrode assembly of a laminated structure, the positive electrode plate, the negative electrode plate and the separator may be cut into any specified size.

Optionally, the first electrode assembly 221 may be any one of a cylindrical wound structure, an elliptic wound structure, or a laminated structure.

Optionally, the second electrode assembly 222 may be any one of a cylindrical wound structure, an elliptic wound structure, or a laminated structure.

In this embodiment of this application, the first electrode assembly 221 and the second electrode assembly 222 may be the same or different in structure. If the two electrode assemblies are the same in structure, the electrode assemblies can be manufactured by using a same process, thereby simplifying a technological process. If the two electrode assemblies are different in structure, sizes of the electrode assemblies can be reasonably designed by using the characteristic that electrode assemblies of different structures require different spaces, so as to make full use of an internal space of a battery cell, improving space utilization in the battery cell, thereby increasing the energy density of the battery cell.

The shape of the battery cell 20 is not specifically limited in this embodiment of this application. The battery cell 20 may be of various regular shapes or irregular shapes, for example, a cylindrical battery cell, a prismatic battery cell, a triangular prismatic battery cell, and a quadrangular prismatic battery cell.

Optionally, in some implementations, the battery cell 20 may be of a polyhedral structure. Specifically, as shown in FIG. 5, the battery cell 20 may include a first wall 2 and a second wall 202 connected to each other. The first wall 201 is the largest wall of the battery cell 20, where the first wall 201 is disposed perpendicular to the first direction, the second wall 202 is inclined with respect to the first wall 201, and a cross section of the battery cell 20 on a plane perpendicular to the first wall 201 and the second wall 202 is a trapezoid.

It should be understood that the polyhedral structure referred to in this application refers to a three-dimensional structure enclosed by four or more polygons. For ease of understanding, the first direction here may be construed as a direction parallel to a direction Z shown in FIG. 5. The cross section on the plane vertical to the first wall 201 and the second wall 202 may be construed as a plane parallel to an X-Z plane shown in FIG. 5.

Optionally, the battery cell 20 may be a hexahedron. The battery cell of a hexahedral structure is relatively stable and also convenient to process, assemble and arrange. Considering that the box 11 is usually a cuboid, the battery cell 20 of a hexahedral structure is configured as a regular hexahedron to facilitate arrangement and combination, thereby improving the assembly efficiency of the battery 10.

The following describes the structures of the first electrode assembly 221 and the second electrode assembly 222 as well as an arrangement manner in the battery cell 20 with reference to FIG. 6 to FIG. 8.

In an example, as shown in FIG. 6, the first electrode assembly 221 and the second electrode assembly 222 are both of elliptic wound structures, the first electrode assembly 221 and the second electrode assembly 222 are stacked along the first direction, and the first electrode assembly 221 is close to the first wall 201. Width of the first electrode assembly 221 along the second direction is greater than width of the second electrode assembly 222 along the second direction, where the second direction is perpendicular to the first direction. Similar to the understanding of the first direction, the second direction here can be construed as a direction parallel to a direction X shown in FIG. 5. In addition, in the following related descriptions of the accompanying drawings, the understanding of the first direction and the second direction is similar to that of the directions in FIG. 5, which is not described below again.

It should be noted that the width of the first electrode assembly 221 along the second direction referred to in this embodiment of this application may refer to a distance between two farthest positions of the first electrode assembly 221 in the second direction, for example, width w1 shown in FIG. 6. Similarly, the width of the second electrode assembly 222 along the second direction may refer to a distance between two farthest positions of the second electrode assembly 222 in the second direction, for example, width w2 shown in FIG. 6. In other words, w1>w2.

In this embodiment of this application, the first wall 201 is the largest wall of the battery cell 20. Therefore, in the battery cell 20, a space closer to the first wall 201 is larger. In this embodiment of this application, the first electrode assembly 221 and the second electrode assembly 222 have different width parameters in the second direction, where the electrode assembly closer to the first wall 201 may be provided with a greater width, so that the internal space of the battery cell 20 can be fully used, thereby improving the space utilization in the battery cell. Correspondingly, the energy density of the battery cell and the energy density of a battery formed by packaging the battery cell can be increased.

Optionally, still referring to FIG. 6, in an embodiment, when the first electrode assembly 221 and the second electrode assembly 222 are made of a same material, thickness of the first electrode assembly 221 along the first direction is less than thickness of the second electrode assembly 222 along the first direction.

It should be noted that the thickness of the first electrode assembly 221 along the first direction referred to in this embodiment of this application may refer to a distance between two farthest positions of the first electrode assembly 221 in the first direction, for example, thickness t1 shown in FIG. 6. Similarly, the thickness of the second electrode assembly 222 along the first direction may refer to a distance between two farthest positions of the second electrode assembly 222 in the first direction, for example, thickness t2 shown in FIG. 6. In other words, t1<t2.

In this embodiment of this application, when the first electrode assembly 221 and the second electrode assembly 222 are made of a same material, the widths of the two electrode assemblies may be set to satisfy w1>w2, and the thicknesses are set to satisfy 11 <t2. That is, the two electrode assemblies differ in both width and thickness, thereby easily satisfying the requirement that the first electrode assembly 221 and the second electrode assembly 222 have a same capacity.

Optionally, still referring to FIG. 6, in another embodiment, when the first electrode assembly 221 and the second electrode assembly 222 are made of different materials, thickness of the first electrode assembly 221 along the first direction is less than or equal to thickness of the second electrode assembly 222 along the first direction. In other words, the thicknesses of the first electrode assembly 221 and the second electrode assembly 222 in the first direction satisfy t1 ≤ t2.

In this embodiment of this application, when the first electrode assembly 221 and the second electrode assembly 222 are made of different materials, the two electrode assemblies are different in width and may be different or the same in thickness, thereby easily satisfying the requirement that the first electrode assembly 221 and the second electrode assembly 222 have a same capacity.

It should be understood that the foregoing embodiment provides a thickness parameter relationship and a width parameter relationship between the first electrode assembly 221 and the second electrode assembly 222, and a specific value of each dimension parameter needs to be further calculated based on an actual situation. Details are not described herein. Actually, the capacity of the electrode assembly is affected by various factors. When the first electrode assembly 221 and the second electrode assembly 222 need to have a same capacity, persons skilled in the art can design and select the factors depending on actual needs, which is not limited to the implementations provided in this embodiment of this application. In addition, in some other embodiments, the first electrode assembly 221 and the second electrode assembly 222 may differ in capacity, and accordingly the widths and thicknesses of the two electrode assemblies may satisfy the foregoing relationships or other relationships.

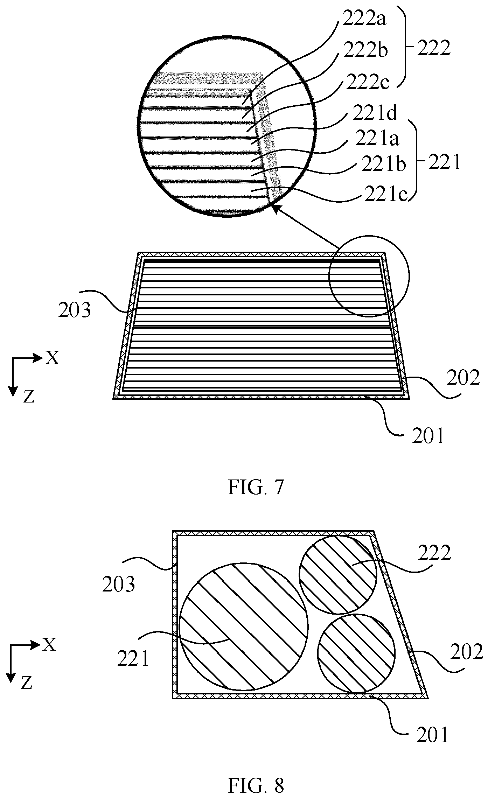

In another example, as shown in FIG. 7, the first electrode assembly 221 and the second electrode assembly 222 are both of laminated structures, and the first electrode assembly 221 is close to the first wall 201. The first electrode assembly 221 includes a first anode electrode plate 221a and a first cathode electrode plate 221c separated by a first separator 221b. The second electrode assembly 222 includes a second anode electrode plate 222a and a second cathode electrode plate 222c separated by a second separator 222b. The first anode electrode plate 221a and the second cathode electrode plate 222c are opposite each other and separated by a third separator 221d. The second anode electrode plate 222a, the second separator 222b, the second cathode electrode plate 222c, the third separator 221d, the first anode electrode plate 221a, the first separator 221b, and the first cathode electrode plate 221c are stacked in sequence along the first direction, and have progressively increased widths in the second direction. The second direction is perpendicular to the first direction.

In this embodiment of this application, the first wall 201 is the largest wall of the battery cell 20. Therefore, in the battery cell 20, a space closer to the first wall 201 is larger. In this embodiment of this application, the first electrode assembly 221 and the second electrode assembly 222 are both of laminated structures. Laminates on all layers have different width parameters in the second direction, where the laminate closer to the first wall 201 may be provided with a greater width, so that the internal space of the battery cell 20 can be fully used, thereby improving the space utilization in the battery cell. Correspondingly, the energy density of the battery cell and the energy density of a battery formed by packaging the battery cell can be increased.

Optionally, still referring to FIG. 7, in an embodiment, the battery cell 20 further includes a third wall 203 connected to the first wall 201, and the third wall 203 and the second wall 202 are disposed opposite each other. A plane on which edges, facing the second wall 202, of the second anode electrode plate 222a, the second separator 222b, the second cathode electrode plate 222c, the third separator 221d, the first anode electrode plate 221a, the first separator 221b, and the first cathode electrode plate 221c are located is parallel to the second wall 202. A plane on which edges, facing the third wall 203, of the second anode electrode plate 222a, the second separator 222b, the second cathode electrode plate 222c, the third separator 221d, the first anode electrode plate 221a, the first separator 221b, and the first cathode electrode plate 221c are located is parallel to the third wall 203.

In other words, the width of each laminate in the battery cell 20 may change with arrangement directions of the second wall 202 and the third wall 203 with respect to the first wall 201. In some embodiments, two ends of each laminate in the second direction may be in contact with or have a small reserved gap between them and the second wall 202 and the third wall 203, respectively. In this case, the internal space of the battery cell can be fully used.

In another example, as shown in FIG. 8, the first electrode assembly 221 and the second electrode assembly 222 are both of cylindrical wound structures. The first electrode assembly 221 and the second electrode assembly 222 differ in diameter.

Electrode assemblies with different diameters require different spaces. Therefore, in an actual design, an electrode assembly with a large diameter may be disposed in a region with a larger space in the battery cell, and an electrode assembly with a small diameter is disposed in a region with a limited space, thereby avoiding a problem about underutilization of space caused by setting the diameters of the electrode assemblies as a uniform size. Particularly, when the battery cell is in an irregular shape or of a non-centrosymmetric structure, the electrode assemblies with different diameters can fit the internal space of the battery cell, making full use of the internal space of the battery cell, thereby increasing the energy density of the battery cell.

It should be noted that the foregoing embodiment is described by using an example in which the battery cell 20 includes two electrode assemblies. In other embodiments, the battery cell 20 may include another quantity of electrode assemblies, for example, three, four, five, or more. In these electrode assemblies, two or more of the electrode assemblies may be the same in size and capacity, or these electrode assemblies differ in both size and/or capacity. This is not limited in the embodiments of this application. However, it can be understood that the battery cell 20 includes at least two electrode assemblies, and the two electrode assemblies differ in size and/or capacity.

Optionally, in some embodiments, when an electrode assembly of a cylindrical wound structure is provided in the battery cell, the electrode assembly is provided in a quantity greater than or equal to 2. As an example rather than a limitation, the battery cell may include two or three electrode assemblies, where the two or three electrode assemblies include the first electrode assembly 211 and the second electrode assembly 222.

In some embodiments, each electrode assembly in the battery cell may include a positive electrode plate, a negative electrode plate, and a spacing structure disposed between the positive electrode plate and the negative electrode plate. The spacing structure is configured to form a spacing between the positive electrode plate and the negative electrode plate, and the spacing is used for absorbing swelling of the electrode assembly.

The spacing between the positive electrode plate and the negative electrode plate can absorb swelling of the electrode assemblies to form self-constrained swelling. Therefore, an outer diameter of the cylindrical electrode assembly changes little after swelling, giving little pressure to the housing of the battery cell 20. The housing of the battery cell 20 has small swelling deformation, and no swelling space needs to be reserved outside the housing. In addition, no additional end plate is required for constraining the first wall 201 of the battery cell, thereby reducing a manufacturing cost of the battery cell.

Optionally, in an embodiment, the positive electrode plate and/or the negative electrode plate may be coated with coatings at intervals to form multiple protrusion structures as separation structures. For example, the coating may be made of polycarbosilane (polysilacarbosilane, PCS).

Optionally, in another embodiment, the positive electrode plate and/or the negative electrode plate may be coated with patterns (pattern) to form separation structures.

It is mentioned in related descriptions in FIG. 5 to FIG. 8 that a cross section of the battery cell 20 on a plane vertical to the first wall 201 and the second wall 202 is a trapezoid. Optionally, the trapezoid may be an isosceles trapezoid, a right trapezoid, or an ordinary trapezoid.

If the cross section of the battery cell 20 on the plane vertical to the first wall 201 and the second wall 202 is an isosceles trapezoid, as shown in FIG. 7, an included angle between the second wall 202 and the first wall 201 is equal to an included angle between the third wall 203 and the first wall 201. Correspondingly, the second wall 202 and the first wall 201 form a wedge structure, and the third wall 203 and the first wall 201 form another wedge structure.

If the cross section of the battery cell 20 on the plane vertical to the first wall 201 and the second wall 202 is a right trapezoid, as shown in FIG. 8, an included angle between the second wall 202 and the first wall 201 is an acute angle, and an included angle between the third wall 203 and the first wall 201 is a right angle. Correspondingly, the second wall 202 and the first wall 201 form a wedge structure.

If the cross section of the battery cell 20 on the plane vertical to the first wall 201 and the second wall 202 is an ordinary trapezoid, an inclination direction of the third wall 203 with respect to the first wall 201 may be opposite an inclination direction of the second wall 202, and an included angle between the second wall 202 and the first wall 201 is not equal to an included angle between the third wall 203 and the first wall 201. Alternatively, the inclination direction of the third wall 203 with respect to the first wall 201 may be the same as the inclination direction of the second wall 202, and the included angle between the second wall 202 and the first wall 201 is greater than a supplementary angle of the included angle between the third wall 203 and the first wall 201.

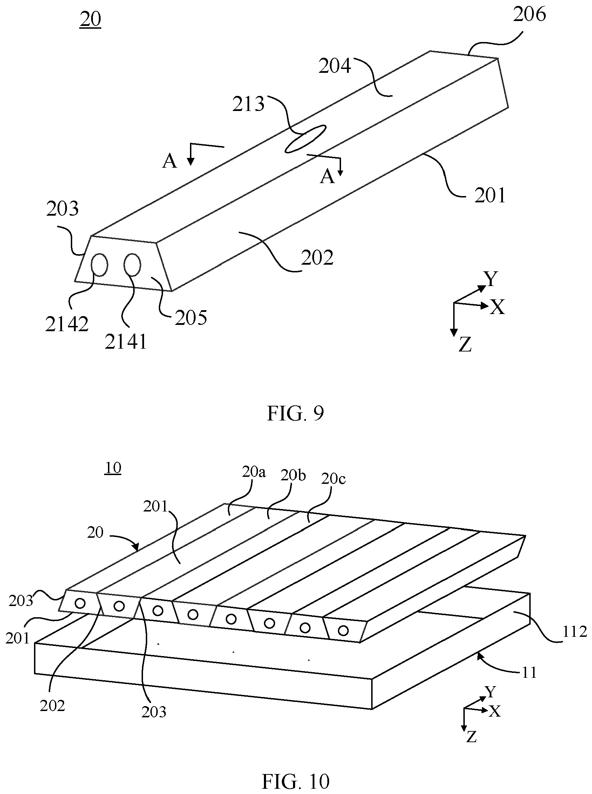

For ease of understanding, FIG. 9 is a schematic three-dimensional diagram of a battery cell according to an embodiment of this application. FIG. 5 to FIG. 8 may be schematic cross-sectional views of the battery cell 20 shown in FIG. 9 split along a line A-A.

As shown in FIG. 9, the battery cell 20 includes a second wall 202 and a third wall 203 disposed opposite each other, a first wall 201 and a fourth wall 204 disposed opposite each other, as well as a fifth wall 205 and a sixth wall 206 disposed opposite each other. The first wall 201 is the largest wall of the battery cell 20, the second wall 202 is inclined with respect to the first wall 201, and the third wall 203 is inclined or disposed perpendicularly with respect to the first wall 201. The fifth wall 205 is connected to the first wall 201 and the second wall 202, and the sixth wall 206 is connected to the first wall 201 and the second wall 202.

For ease of understanding, the second wall 202 and the third wall 203 may be considered as two walls disposed in a width direction (that is, a direction X shown in the figure) of the battery cell 20. The first wall 201 and the fourth wall 204 may be considered as two walls disposed in a thickness direction (that is, a direction Z shown in the figure) of the battery cell 20. The fifth wall 205 and the sixth wall 206 may be considered as two walls disposed in a length direction (that is, a direction Y shown in the figure) of the battery cell 20.

In this embodiment of this application, as shown in FIG. 9, the battery cell 20 further includes a first electrode terminal 2141 and a second electrode terminal 2142. One of the first electrode terminal 2141 and the second electrode terminal 2142 is a positive electrode terminal, and the other one is a negative electrode terminal.

Optionally, in an embodiment, the first electrode terminal 2141 and the second electrode terminal 2142 are disposed on a same wall of the battery cell 20. This wall on which the electrode terminals are disposed may be any wall of the battery cell 20.

As an example rather than a limitation, the first electrode terminal 2141 and the second electrode terminal 2142 may be disposed on a wall (for example, the fifth wall 205 or the sixth wall 206) connected to both the first wall 201 and the second wall 203 on the battery cell 20. In this way, during packaging of multiple battery cells, the multiple battery cells can be conveniently electrically connected.

Optionally, in another embodiment, the first electrode terminal 2141 and the second electrode terminal 2142 are disposed on two different walls of the battery cell 20. The walls on which the electrode terminals are disposed may be any two walls of the battery cell 20.

As an example rather than a limitation, the first electrode terminal 2141 may be disposed on the fifth wall 205, and the second electrode terminal 2142 may be disposed on the sixth wall 206. In this way, during packaging of multiple battery cells, the multiple battery cells can be conveniently electrically connected.

Optionally, in some embodiments, the fifth wall 205 and the sixth wall 206 may be disposed perpendicular to the first wall 201. In this way, the multiple battery cells can be attached to each other through the fifth walls 205 or the sixth walls 206, facilitating assembly and arrangement of the battery cells.

In this embodiment of this application, as shown in FIG. 9, the battery cell 20 may further include a pressure relief mechanism 213. The pressure relief mechanism 213 may be disposed on a same wall of the battery cell 20 as the first electrode terminal 2141 or the second electrode terminal 2142, or may be disposed on a different wall from the first electrode terminal 2141 and the second electrode terminal 2142. This is not limited in the embodiments of this application.

FIG. 10 is a schematic structural diagram of a battery according to an embodiment of this application.

As shown in FIG. 10, the battery 10 includes a box 11 and multiple rows of battery cells 20, where the multiple rows of battery cells 20 are accommodated in the box 11. The battery cell 20 may be the battery cell 20 according to any embodiment described in the foregoing FIG. 5 to FIG. 9.

Specifically, the battery cell 20 is of a polyhedral structure. The battery cell 20 includes a first wall 201 and a second wall 202 connected to each other, where the first wall 201 is the largest wall of the battery cell 20. The first wall 201 is disposed perpendicular to the first direction, and the second wall 202 is inclined with respect to the first wall 201. A cross section of the battery cell 20 on a plane vertical to the first wall 201 and the second wall 202 is a trapezoid.

The multiple rows of battery cells 20 are arranged along the second direction, where the second direction is perpendicular to the first direction, and the first direction is parallel to the direction of gravity. The multiple rows of battery cells 20 include a first row of battery cells 20a and a second row of battery cells 20b disposed adjacent to each other along the second direction. The first row of battery cells 20a and the second row of battery cells 20b are attached to each other through the second walls 202, so as to form interaction forces in the first direction between the first row of battery cells 20a and the second row of battery cells 20b.

It should be understood that in this embodiment of this application, the box 11 of the battery 10 may be of a polyhedral structure. When the battery 10 is installed in an electric device, along the direction of gravity, the uppermost one of multiple surfaces of the box 11 serves as an upper cover of the box 11. On the contrary, the lowermost one of the multiple surfaces serves as a bottom wall of the box 11. In addition, the upper cover of the box 11 may be perpendicular to the direction of gravity, or inclined with respect to the direction of gravity. The bottom wall of the box 11 may be perpendicular to the direction of gravity, or inclined with respect to the direction of gravity. The upper cover and the bottom wall of the box 11 may be parallel to each other or unparallel to each other. For example, using FIG. 2 as an example, for a cuboid box 11, a bottom wall opposite an opening on a second portion 112 may be disposed downward so as to serve as a bottom wall of the battery 10 that is in use after installation. Correspondingly, a bottom wall of a first portion 111 serves as an upper cover of the battery 10. Alternatively, the bottom wall of the first portion 111 is disposed downward to serve as the bottom wall of the battery 10 that is in use after installation. Correspondingly, the bottom wall of the second portion 112 serves as the upper cover of the battery 10. This embodiment of this application is not limited thereto.

For ease of description, in this application, an example in which the bottom wall of the second portion 112 is disposed downward to serve as the bottom wall of the battery 10, while the bottom wall of the first portion 111 (not shown in FIG. 10, referring to a first portion 111 shown in FIG. 2) serves as the upper cover of the battery 10 is used for description. In addition, the bottom wall of the first portion 111 and the bottom wall of the second portion 112 being parallel to each other and both perpendicular to the direction of gravity is used herein as an example.

In addition, the first direction in this embodiment of this application is perpendicular to the upper cover or the bottom wall of the box 11. Therefore, the first direction may be parallel to the direction of gravity, or may alternatively be inclined with respect to the direction of gravity. For ease of understanding, the following uses an example in which the first direction is parallel to the direction of gravity for description. In addition, the first direction in this embodiment of this application may include a positive direction and a negative direction, where the positive direction of the first direction is consistent with the direction of gravity, that is, the positive direction of the first direction is a direction Z as indicated by an arrow in FIG. 10. The negative direction of the first direction is opposite to the direction of gravity, that is, the negative direction of the direction is opposite to the direction Z as indicated by the arrow in FIG. 10.

The second direction in this embodiment of this application is perpendicular to the first direction, and the second direction may include a positive direction and a negative direction. For example, the positive direction of the second direction may be a direction X as indicated by an arrow in FIG. 10, while the negative direction of the second direction is opposite to the positive direction of the second direction, that is, the negative direction of the second direction is opposite to the direction X as indicated by the arrow in FIG. 10.

In this embodiment of this application, the battery cell 20 is of a polyhedral structure. The first wall 201 and the second wall 202 are two intersected walls of the battery cell 20. In addition, the first wall 201 is perpendicular to the first direction, and the second wall 202 is inclined with respect to the first wall 201, that is, the second wall 202 is inclined with respect to the first direction. Therefore, the included angle between the first wall 201 and the second wall 202 is not a right angle, and the first wall 201 and the second wall 202 are not perpendicular to each other. The first row of battery cells 20a and the second row of battery cells 20b disposed adjacent to each other along the second direction are attached to each other through the second walls 202, and the second walls 202 are inclined with respect to the first direction, so that interaction forces can be formed in the first direction between the first row of battery cells 20a and the second row of battery cells 20b. That is, the second walls 202 of the first row of battery cells 20a can experience at least part of interaction force along the first direction from the second row of battery cells 20b. Similarly, the second walls 202 of the second row of battery cells 20b can also experience at least part of the interaction force along the first direction from the first row of battery cells 20a.

Therefore, during use of the first row of battery cells 20a and the second row of battery cells 20b in this embodiment of this application, interaction forces may be generated in the direction of gravity when the battery 10 is under vibration impact, and accordingly interaction forces in the first direction are generated, or the battery cells 20 may swell and deform during charge and discharge, and thus interaction forces in the first direction are generated. Thus, the first row of battery cells 20a and the second row of battery cells 20b can experience part of the interaction forces in the first direction through the second walls 202, so as to reduce impact of the interaction forces on the first row of battery cells 20a and the second row of battery cells 20b, for example, the deformation of the battery cells, especially the deformation in the first direction. Generally, reducing the deformation in a battery cell 20 can enhance the stiffness and strength of the overall battery 10, thereby preventing safety risks caused by vibration impact or the like during use of the battery 10. In addition, the multiple rows of battery cells 20 disposed in the battery 10 cooperate with each other to improve the space utilization in the box 11 of the battery 10, thereby increasing the energy density of the battery 10.

Optionally, in this embodiment of this application, the battery cell 20 further includes a third wall 203 connected to the first wall 201, and the third wall 203 and the second wall 202 are disposed opposite each other and unparallel to each other. Referring to FIG. 10, the multiple rows of battery cells 20 further include a third row of battery cells 20c, where the third row of battery cells 20c and the second row of battery cells 20b are disposed adjacent to each other along the second direction, and the third row of battery cells 20c and the second row of battery cells 20b are attached to each other through the third walls 203.

In this embodiment of this application, the first row of battery cells 20a and the second row of battery cells 20b are attached to each other through the second walls 202, and the second row of battery cells 20b and the third row of battery cells 20c are attached to each other through the third walls 203. The multiple rows of battery cells 20 are disposed in the box 11 in a manner of cooperating with one another to improve the space utilization in the box 11, thereby increasing the energy density of the battery 10.

Optionally, in an embodiment, the third wall 203 is inclined with respect to the first wall 201. An inclination direction of the third wall 203 with respect to the first wall 201 may be opposite an inclination direction of the second wall 202 with respect to the first wall 201. Alternatively, an inclination direction of the third wall 203 with respect to the first wall 201 may be the same as an inclination direction of the second wall 202 with respect to the first wall 201, and the third wall 203 is more likely to be perpendicular to the first wall 201 than the second wall 202.

Optionally, in some embodiments, when the third wall 203 is inclined with respect to the first wall 201, an included angle between the third wall 203 and the first wall 201 is equal to an included angle between the second wall 202 and the first wall 201.

In this embodiment of this application, the first wall 201 and the third wall 203 are two intersected walls of the battery cell 20, where the first wall 201 is perpendicular to the first direction, and the third wall 203 is inclined with respect to the first wall 201, that is, the third wall 203 is inclined with respect to the first direction. Therefore, the included angle between the first wall 201 and the third wall 203 is not a right angle, and the first wall 201 and the third wall 203 are not perpendicular to each other. The second row of battery cells 20b and the third row of battery cells 20c disposed adjacent to each other along the second direction are attached to each other through the third walls 203, and the third walls 203 are inclined with respect to the first direction, so that interaction forces can be formed in the first direction between the second row of battery cells 20b and the third row of battery cells 20c. That is, the third walls 203 of the second row of battery cells 20b can experience at least part of an interaction force along the first direction from the third row of battery cells 20c. Similarly, the third walls 203 of the third row of battery cells 20c can also experience at least part of the interaction force along the first direction from the second row of battery cells 20b.

The second row of battery cells 20b and the third row of battery cells 20c can experience part of the interaction forces in the first direction through the third walls 203, so as to reduce the impact of the interaction forces on the second row of battery cells 20b and the third row of battery cells 20c, for example, the deformation of the battery cells, especially the deformation in the first direction. Further, reducing the deformation of the battery cell can enhance the stiffness and strength of the overall battery 10, thereby preventing safety risks caused by vibration impact and the like during use of the battery 10.

Optionally, in another embodiment, the third wall 203 is disposed perpendicular to the first wall 201. That is, the third wall 203 is also parallel to the first direction (that is, the direction of gravity).

Considering that the box 11 is usually a cuboid, when the third wall 203 is disposed perpendicular to the first wall 201, the third wall 203 of the battery cell 20 close to the inner wall of the box may be disposed facing the inner wall of the box, facilitating installation, thereby improving the assembly efficiency of the battery. In addition, the multiple rows of battery cells can form a regular cuboid after being arranged and combined, so as to fit the cuboid box 11. The internal space of the box 11 is fully used, and thus the space utilization in the box can be improved, thereby increasing the energy density of the battery 10.

In this embodiment of this application, an inclination angle of a wall inclined with respect to the first wall 201 in the battery cell 20 may be generally set based on actual application.

Specifically, the second wall 202 is inclined with respect to the first wall 201, and an included angle between the second wall 202 and the first wall 201 may be greater than or equal to 30° and less than 90°, to be specific, the included angle between the second wall 202 and the first wall 201 may be within a value range of [30°, 90°), for example, [85°, 90°).

From another perspective, the first wall 201 is perpendicular to the first direction, while the second wall 202 is inclined with respect to the first wall 201, so that the second wall 202 is also inclined with respect to the first direction. An inclination angle of the second wall 202 with respect to the first direction may be within a value range of (0°, 60°]. Further, the inclination angle of the second wall 202 may be within a value range of (0°, 5°]

With respect to the first wall 201, the third wall 203 may be inclined or disposed perpendicularly. An included angle between the third wall 203 and the first wall 201 may be greater than or equal to 30° and less than 150°, to be specific, the included angle between the third wall 203 and the first wall 201 may be within a value range of [30°, 150°), for example, [85°, 90°].

From another perspective, the first wall 201 is perpendicular to the first direction, while the third wall 203 is inclined with respect to the first wall 201, so that the third wall 203 may be inclined with respect to the first direction or disposed parallel to the first direction. An inclination angle of the third wall 203 with respect to the first direction may be within a value range of (-60°, 60°]. Further, the inclination angle of the third wall 203 may be within a value range of (-5°, 5°]

It should be noted that in this embodiment of this application, when the third wall 203 and the second wall 202 are inclined opposite each other, the inclination angle of the third wall 203 is defined to be positive; and when the third wall 203 and the second wall 202 are inclined in a same direction, the inclination angle of the third wall 203 is defined to be negative.

In this embodiment of this application, the cross section of the battery cell 20 on the plane vertical to the first wall 201 and the second wall 202 is a trapezoid. Therefore, the included angle between the third wall 203 and the first wall 201 may be equal to the included angle between the second wall 202 and the first wall 201. In this case, the cross section is an isosceles trapezoid. The included angle between the third wall 203 and the first wall 201 and the included angle between the second wall 202 and the first wall 201 cannot be supplementary angles. Otherwise, the cross section is a parallelogram. In addition, the first wall 201 is the largest wall of the battery cell 20. Therefore, when the third wall 203 and the second wall 202 are inclined in a same direction, an inclination angle of the third wall 203 with respect to the first direction should be less than an inclination angle of the second wall 202 with respect to the first direction.

In this embodiment of this application, the inclination angle of the second wall 202 with respect to the first direction may be the same as or different from the inclination angle of the third wall 203 with respect to the first direction. If the foregoing inclination angles set are too large, the size design difficulty of the electrode assembly in the battery cell 20 may be increased, and the internal space utilization of the battery cell 20 may also be affected. In addition, when the battery cells 20 are assembled into a battery, an arrangement manner of the battery cells 20 may also be affected, space between the battery cells 20 and the box 11 is enlarged, the space utilization of the battery 10 is reduced, and accordingly the energy density of the battery 10 is reduced.

The following describes arrangement and combination manners of multiple rows of battery cells 20 in the box 11 with reference to the accompanying drawings.

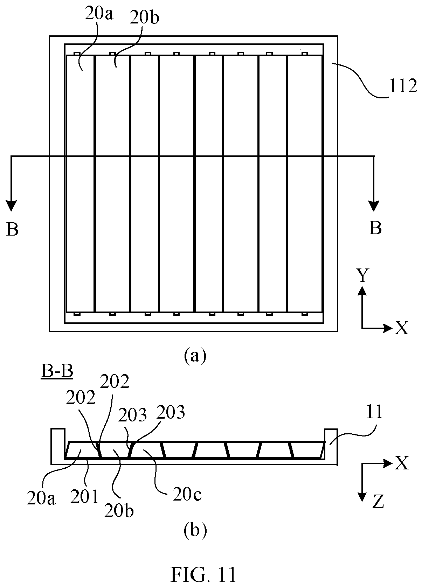

FIG. 11 is a schematic top view and cross-sectional view of the battery shown in FIG. 10. (a) of FIG. 11 is the top view of the battery 10 shown in FIG. 10 in an X-Y plane, and (b) of FIG. 11 is the schematic cross-sectional view of the battery 10 split along a B-B line.

As shown in (b) of FIG. 11, the third wall 203 of the battery cell 20 is inclined with respect to the first wall 201, and the third wall 203 and the second wall 202 are inclined opposite each other. The second row of battery cells 20b is attached to the first row of battery cells 20a through the second walls 202, and is attached to the third row of battery cells 20c through the third walls 203.

In this case, in the multiple rows of battery cells, adjacent battery cells in the second direction overlap through inclined walls of the battery cells, so that any two adjacent rows of battery cells can form interaction forces therebetween in the first direction, thereby implementing mutual restriction and constraint. In addition, the inclined walls can increase a gluing area to enhance the overall stiffness and strength of the battery 10, thereby preventing safety risks caused by vibration impact during use of the battery 10.

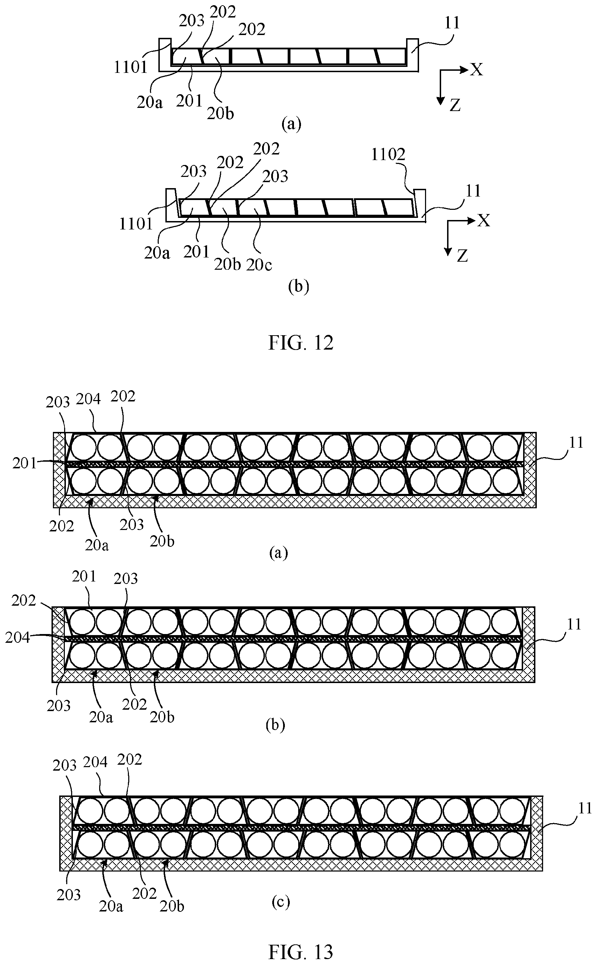

FIG. 12 is another schematic cross-sectional view of the battery shown in FIG. 10.

As shown in (a) of FIG. 12, the third wall 203 of the battery cell 20 is disposed perpendicular to the first wall 201. The first row of battery cells 20a and the second row of battery cells 20b are attached to each other through the second walls 202. The box 11 further includes a first box inner wall 1101, where the first box inner wall 1101 is perpendicular to the first wall 201 and parallel to the third wall 203.

In this case, in the multiple rows of battery cells, any row of battery cells overlaps with another adjacent row of battery cells through inclined walls of the battery cells. Each row of battery cells can form interaction forces in the first direction with one adjacent row of battery cells, implementing mutual restriction and constraint, thereby enhancing the overall stiffness and strength of the battery 10. In addition, considering that the box is typically a cuboid, in this embodiment of this application, the third walls 203 of one row of battery cells close to the box 11 face the first box inner wall 1101 and are parallel to the first box inner wall 1101. The first box inner wall 1101 may be in direct contact with the battery cell 20 without providing an end plate, not only facilitating assembly but also reducing the internal space of the box 11, thereby increasing the energy density of the battery 10.

As shown in (b) of FIG. 12, the third wall 203 of the battery cell 20 is inclined with respect to the first wall 201, and the third wall 203 and the second wall 202 are inclined in a same direction. The second row of battery cells 20b is attached to the first row of battery cells 20a through the second walls 202, and is attached to the third row of battery cells 20c through the third walls 203.

Differing from (b) of FIG. 11 and (a) of FIG. 12, (b) of FIG. 12 shows a box 11 that includes a first box inner wall 1101 and a second box inner wall 1102 disposed opposite each other. Here, the first box inner wall 1101 is inclined with respect to the first direction, and the second box inner wall 1102 is inclined with respect to the first direction.

As an example rather than a limitation, an inclination angle of the first box inner wall 1101 with respect to the first direction may be equal to an inclination angle of the third wall 203 of the battery cell 20 with respect to the first direction or an inclination angle of the second wall 202 of the battery cell 20 with respect to the first direction. An inclination angle of the second box inner wall 1102 with respect to the first direction may be equal to an inclination angle of the second wall 202 of the battery cell 20 with respect to the first direction or an inclination angle of the third wall 203 of the battery cell 20 with respect to the first direction. The inclination angle of the first box inner wall 1101 and the inclination angle of the second box inner wall 1102 may be the same or different.

In an actual design, a wall, facing the first box inner wall 1101, of the battery cell may be set as a wall having a same inclination angle as the first box inner wall 1101; and a wall, facing the second box inner wall 1102, of the battery cell may be set as a wall having a same inclination angle as the second box inner wall 1102. When the multiple rows of battery cells are installed in the box 11, the battery cells can well fit the box inner walls. In addition, the box inner wall is in surface contact with the battery cells, not only making full use of the internal space of the box but also restricting the battery cells by virtue of the box inner wall.

It can be understood that a solution that the inner wall of the box 11 is inclined with respect to the first direction is also applicable to arrangement and combination manners of the battery cells shown in (b) of FIG. 11. A specific design consideration is similar to that in (b) of FIG. 12. For brevity, this is not described herein again.

FIG. 13 is a schematic diagram of a partial structure of a battery according to an embodiment of this application.

Referring to FIG. 13, the battery cell 20 further includes a fourth wall 204 parallel to the first wall 201, where the fourth wall 204 is connected to the second wall 202. Battery cells in each of the multiple rows of battery cells are stacked along the first direction; and in each row of the battery cells, the adjacent battery cells are attached to each other through the first walls 204 and/or the fourth walls 204.

In an example, referring to (a) of FIG. 13, using the first row of battery cells 20a in the multiple rows of battery cells as an example, the first row of battery cells 20a may include two battery cells that are stacked along the first direction. The first walls 201 of the two battery cells are opposite each other.

In another example, referring to (b) of FIG. 13, still using the first row of battery cells 20a in the multiple rows of battery cells as an example, the first row of battery cells 20a may include two battery cells that are stacked along the first direction. The fourth walls 204 of the two battery cells are opposite each other.

In still another example, referring to (c) of FIG. 13, still using the first row of battery cells 20a in the multiple rows of battery cells as an example, the first row of battery cells 20a may include two battery cells that are stacked along the first direction. In the two battery cells, the first wall 201 of one of the battery cells is opposite the fourth wall 204 of the other battery cell.

It can be understood that an example in which each row of the battery cells includes two battery cells that are stacked along the first direction is used for description in FIG. 13. However, in an actual application, each row of the battery cells may include three or more battery cells that are stacked. In this case, in each row of the battery cells, adjacent two of the battery cells may be arranged in any manner described in (a), (b), and (c) of FIG. 13. This is not limited in this embodiment of this application. A battery cell located at a middle position is attached to another two battery cells adjacent to this battery cell through the first wall 201 and the fourth wall 204, respectively.

Optionally, in some embodiments, the battery 10 includes N rows of battery cells 20, each of the N rows of battery cells 20 including M battery cells 20, where M and N are positive integers greater than 1 and N is greater than or equal to M.

Optionally, in an embodiment, referring to (a) to (c) of FIG. 13, in each row of the battery cells, projections of the first walls 201 of any two battery cells along the first direction overlap. Correspondingly, projections of the fourth walls 201 of any two battery cells along the first direction may also overlap.

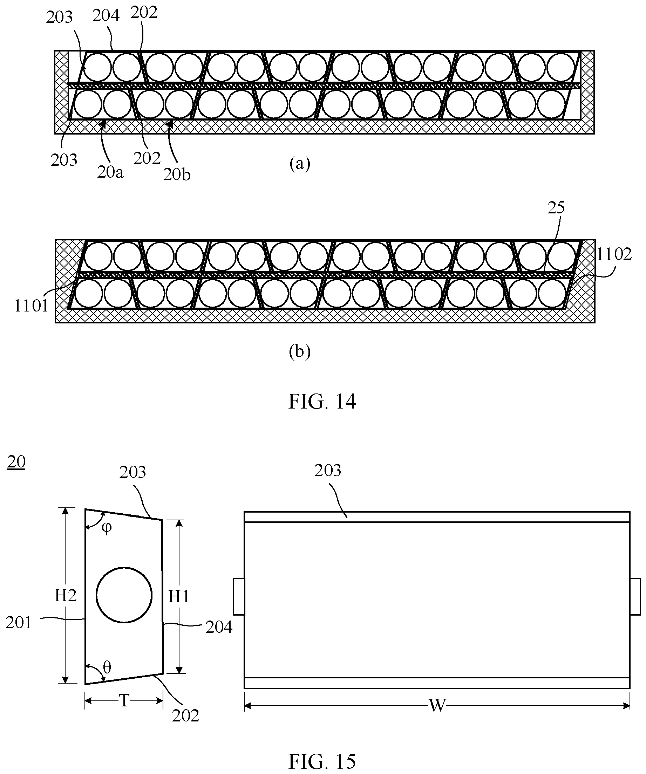

Optionally, in another embodiment, referring to (a) of FIG. 14, in each row of the battery cells, the third walls 203 of any two battery cells are on a same plane. Alternatively, in each row of the battery cells, the second walls 202 of any two battery cells are on a same plane.

In this way, when walls of the multiple rows of battery cells close to the box inner wall are the second walls 202 or the third walls 203, the multiple battery cells can form a regular three-dimensional structure, facilitating installation. In addition, an inner cavity of the box may be adaptively designed as a regular space, so as to reduce gaps between the battery cells 20 and the box 11 as far as possible, thereby improving the space utilization of the box 11.

As an example rather than a limitation, referring to (b) of FIG. 14, the box 11 includes a first box inner wall 1101 and a second box inner wall 1102. The first box inner wall 1101 and the second box inner wall 1102 may be inclined in design, so as to form a space fitting the overall structure of multiple rows of battery cells.

Optionally, referring to (b) of FIG. 14, in this embodiment of this application, separation parts 25 perpendicular to the first direction are provided between the multiple rows of battery cells. The separation parts 25 are configured to separate adjacent battery cells.

Specifically, the separation part 25 is at least one of the following structures: a cross beam, a thermal management part, and a structural adhesive. For example, the separation part 25 may include a cross beam, where the cross beam can support the multiple battery cells 20, so as to enhance the strength of the box 11, thereby enhancing the strength and stability of the battery 10.

Optionally, the separation part 25 in this embodiment of this application may further include a thermal management part. That is, the separation part 25 can accommodate a fluid for temperature adjustment of the multiple battery cells 20. The fluid herein may be liquid or gas, and temperature adjustment refers to heating or cooling the multiple battery cells 20. When cooling the battery cells 10 or reducing temperature of the battery cells 20, the separation part 25 is configured to accommodate a cooling fluid to reduce the temperature of the multiple battery cells 20. In addition, the separation part 25 may also be used for heating so as to increase the temperature of the multiple battery cells 20. This is not limited in this embodiment of this application. Optionally, the fluid may flow circularly to achieve a better temperature adjustment effect. Optionally, the fluid may be water, a liquid mixture of water and ethylene glycol, air, or the like.

Optionally, the separation part 25 in this embodiment of this application may further include a structural adhesive by which the multiple battery cells 20 in direct contact with the separation part 25 can be relatively fixed to the separation part 25. Especially, when the largest walls of the multiple battery cells 20 (that is, the first walls 201 of the battery cells 20) are disposed on a surface of the structural adhesive, the stability of the battery cells 20 can be greatly improved, and thus the strength and stability of the battery 10 are improved.

In this embodiment of this application, in order to make full and proper use of the space in the box 11, each size parameter of the battery cell 20 may be designed based on actual needs, so as to improve the space utilization of the box 11.

It should be noted that FIG. 11 and FIG. 12 briefly describe an attachment manner of multiple rows of battery cells in a second direction, FIG. 13 and FIG. 14 briefly describe an attachment manner of battery cells in each row of the battery cells in a first direction, and embodiments referred to in related descriptions in FIG. 13 and FIG. 14 can be combined with embodiments referred to in related descriptions in FIG. 11 and FIG. 12. For brevity, details are not described herein.

FIG. 15 is a schematic diagram of a dimension of a battery cell according to an embodiment of this application. Referring to FIG. 15, the battery cell 20 includes a first wall 201 and a fourth wall 204 disposed opposite each other, and a second wall 202 and a third wall 203 disposed opposite each other. The second wall 202 and the third wall 203 are both connected to the first wall 201, and the second wall 202 and the third wall 203 are both connected to the fourth wall 204. The first wall 201 is the largest wall of the battery cell 20.

In an example, thickness T of a battery cell 20 in a first direction satisfies 6 mm≤T≤150 mm, for example, the thickness T may satisfy 12 mm≤T≤ 80 mm.

In an example, length W of a battery cell 20 in a third direction satisfies 100 mm≤W≤1200 mm, for example, the length W may satisfy 145 mm≤W≤ 650 mm. Here, the third direction is a direction perpendicular to the first direction and the second direction.

In an example, an included angle θ between the second wall 202 and the first wall 201 satisfies 30°≤θ<90°, for example, 85°≤θ≤90°.

In an example, an included angle ϕ between the third wall 203 and the first wall 201 satisfies 30°≤ϕ<150°, for example, 85°≤ϕ≤90°. Optionally, ϕ=θ.

In an example, if ϕ=θ, a cross section of the battery cell on a plane vertical to the first wall 201 and the second wall 202 is an isosceles trapezoid. Width H2 of the first wall 201 along the second direction and width H1 of the fourth wall 204 along the second direction satisfies H2=H1+2*T*tanθ±c, where cE[0 mm, 10 mm].

It should be understood that when the cross section of the battery cell on the plane vertical to the first wall 201 and the second wall 202 is another trapezoid, for example, a right trapezoid or an ordinary trapezoid, a relationship of the width H2 of the first wall 201 along the second direction and the width H1 of the fourth wall 204 along the second direction may be determined based on θ, ϕ, and T. However, errors c in different cases may be within different value ranges. For brevity, details are not described herein.

In some embodiments, the electrode assembly in the battery cell 20 may be of a laminated structure, where laminates may be laminated along the first direction, for example, in a manner as shown in FIG. 7. If thicknesses of an anode electrode plate, a separator, and a cathode electrode plate are respectively t(a), t(s) and t(c), thickness t of a unit including the anode electrode plate, the separator, the cathode electrode plate and the separator may satisfy t=t(a)+2*t(s)+t(c)±a, where aE[0, 80 um]. In a case that ϕ=θ, a height difference of two adjacent cathode electrode plates (or two adjacent anode electrode plates) satisfies h'=2*t*tan(0)±b, where bE[0, 2 mm].

It should be understood that when the cross section of the battery cell on the plane vertical to the first wall 201 and the second wall 202 is another trapezoid, for example, a right trapezoid or an ordinary trapezoid, the height difference of two adjacent cathode electrode plates (or two adjacent anode electrode plates) may be determined based on θ, ϕ, and t, and errors b in different cases may be within different value ranges. For brevity, details are not described herein.

Optionally, in some embodiments, in order to facilitate forming of the housing and prevent a problem about cracking caused by stress concentration when a transition corner is too sharp, two intersected walls of the battery cell 20 may be connected through a rounded corner. For example, a rounded corner is provided between the first wall 201 and the second wall 202, and a rounded corner is provided between the first wall 201 and the third wall 203.

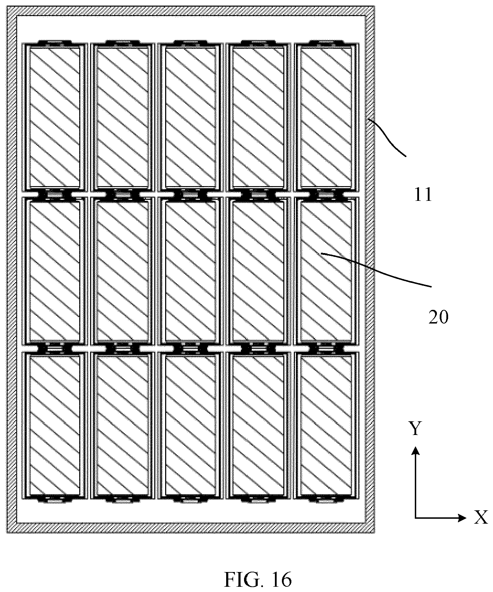

FIG. 16 is a schematic diagram of a cross section of a battery 10 according to an embodiment of this application. The cross section is a cross section along a plane vertical to the first direction, and may also be construed as a cross section parallel to the first wall 201 of the battery cell 20. As shown in FIG. 16, electrode terminals of the battery cell 20 may be disposed at two ends of the battery cell 20, and are then assembled in a manner as shown in FIG. 16 to form the battery 10. In this way, the battery cells 20 in a third direction (that is, a direction Y shown in the figure) are electrically connected without using a busbar. Two adjacent battery cells 20 can be electrically connected by just making the electrode terminals of the two adjacent battery cells 20 along the third direction abut against each other. Such solution can achieve rapid assembly of the battery 10, saves busbars, and does not need to reserve a mounting space for the busbar, thereby improving the assembly efficiency of the battery 10 and also increasing the energy density of the battery 10.

The foregoing describes the battery cell, the battery, and the electric device according to the embodiments of this application; and the following describes a method and device for manufacturing battery cell according to the embodiments of this application. For those not described in detail, refer to the foregoing embodiments.

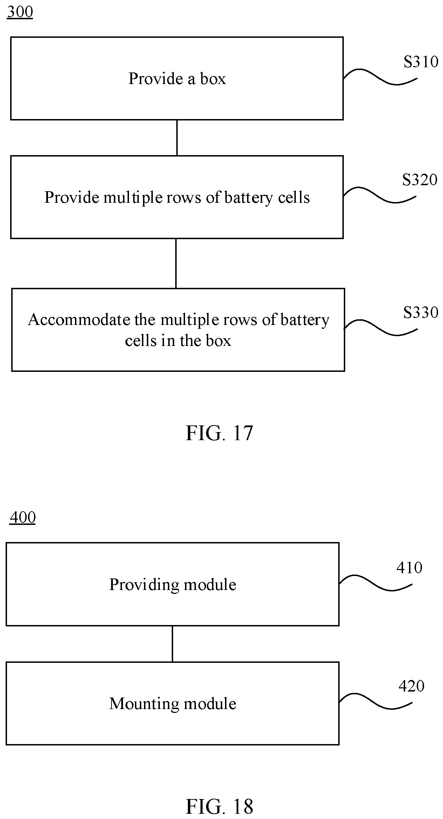

FIG. 17 is a schematic flowchart of a method 300 for manufacturing battery 10 according to an embodiment of this application. As shown in FIG. 17, the method 300 may include:
S310. Provide a box 11.
S320. Provide multiple rows of battery cells 20.

The battery cell 20 is of a polyhedral structure. The battery cell 20 includes a first electrode assembly 221 and a second electrode assembly 222, where the first electrode assembly 221 and the second electrode assembly 222 differ in size and/or capacity so as to fit a structure of the battery cell 20.

The battery cell 20 includes a first wall 201 and a second wall 202 connected to each other, the first wall 201 being the largest wall of the battery cell 20, where the first wall 201 is disposed perpendicular to a first direction, the second wall 202 is inclined with respect to the first wall 201, and a cross section of the battery cell 20 on a plane perpendicular to the first wall 201 and the second wall 202 is a trapezoid.

The multiple rows of battery cells 20 are arranged along a second direction, the second direction being perpendicular to the first direction, and the first direction being parallel to the direction of gravity, where the multiple rows of battery cells 20 include a first row of battery cells 20a and a second row of battery cells 20b disposed adjacent to each other along the second direction, and the first row of battery cells 20a and the second row of battery cells 20b are attached to each other through the second walls 202, so as to form interaction forces in the first direction between the first row of battery cells 20a and the second row of battery cells 20b.

S320. Accommodate the multiple rows of battery cells 20 in the box 11.

FIG. 18 is a schematic block diagram of a device 400 for manufacturing battery 10 according to an embodiment of this application. As shown in FIG. 18, the device 400 may include:

A providing module 410, configured to provide a box 11 and provide multiple rows of battery cells 20. The battery cell 20 is of a polyhedral structure. The battery cell 20 includes a first electrode assembly 221 and a second electrode assembly 222, where the first electrode assembly 221 and the second electrode assembly 222 differ in size and/or capacity so as to fit a structure of the battery cell 20. The battery cell 20 includes a first wall 201 and a second wall 202 connected to each other, the first wall 201 being the largest wall of the battery cell 20, where the first wall 201 is disposed perpendicular to a first direction, the second wall 202 is inclined with respect to the first wall 201, and a cross section of the battery cell 20 on a plane perpendicular to the first wall 201 and the second wall 202 is a trapezoid. The multiple rows of battery cells 20 are arranged along a second direction, the second direction being perpendicular to the first direction, and the first direction being parallel to the direction of gravity, where the multiple rows of battery cells 20 include a first row of battery cells 20a and a second row of battery cells 20b disposed adjacent to each other along the second direction, and the first row of battery cells 20a and the second row of battery cells 20b are attached to each other through the second walls 202, so as to form interaction forces in the first direction between the first row of battery cells 20a and the second row of battery cells 20b.

A mounting module 420, configured to accommodate the multiple rows of battery cells 20 in the box 11.

Although this application has been described with reference to the preferred embodiments, various modifications can be made to this application and the components therein can be replaced with equivalents without departing from the scope of this application. In particular, as long as there is no structural conflict, the various technical features mentioned in the embodiments can be combined in any manners. This application is not limited to specified embodiments disclosed in this specification, but includes all technical solutions falling within the scope of the claims.

## Claims

1. A battery cell (20), **characterized by** comprising:
a first electrode assembly (221) and a second electrode assembly (222), wherein the first electrode assembly (221) and the second electrode assembly (222) differ in size and/or capacity so as to fit a structure of the battery cell (20).

2. The battery cell (20) according to claim 1, **characterized in that** the first electrode assembly (221) and the second electrode assembly (222) are made of different materials.

3. The battery cell (20) according to claim 1 or 2, **characterized in that** the first electrode assembly (221) or the second electrode assembly (222) contains one of lithium cobaltate, lithium iron phosphate, ternary lithium, or lithium manganate as an active material, and the active material in the first electrode assembly (221) differs from the active material in the second electrode assembly (222).

4. The battery cell (20) according to any one of claims 1 to 3, **characterized in that** the first electrode assembly (221) or the second electrode assembly (222) is any one of the following structures:
a cylindrical wound structure, an elliptic wound structure, or a laminated structure.

5. The battery cell (20) according to any one of claims 1 to 4, **characterized in that** the battery cell (20) is of a polyhedral structure; and the battery cell (20) comprises a first wall (201) and a second wall (202) connected to each other, the first wall (201) being the largest wall of the battery cell (20), wherein the first wall (201) is disposed perpendicular to a first direction; the second wall (202) is inclined with respect to the first wall (201); and a cross section of the battery cell (20) on a plane perpendicular to the first wall (201) and the second wall (202) is a trapezoid.

6. The battery cell (20) according to claim 5, **characterized in that** the first electrode assembly (221) and the second electrode assembly (222) are of elliptic wound structures, the first electrode assembly (221) and the second electrode assembly (222) are stacked along the first direction, and the first electrode assembly (221) is close to the first wall (201);
wherein width of the first electrode assembly (221) along a second direction is greater than width of the second electrode assembly (222) along the second direction, the second direction being perpendicular to the first direction.

7. The battery cell (20) according to claim 6, **characterized in that**
under a condition that the first electrode assembly (221) and the second electrode assembly (222) are made of a same material, thickness of the first electrode assembly (221) along the first direction is less than thickness of the second electrode assembly (222) along the first direction; or
under a condition that the first electrode assembly (221) and the second electrode assembly (222) are made of different materials, thickness of the first electrode assembly (221) along the first direction is less than or equal to thickness of the second electrode assembly (222) along the first direction.

8. The battery cell (20) according to claim 5, **characterized in that** the first electrode assembly (221) and the second electrode assembly (222) are of laminated structures, and the first electrode assembly (221) is close to the first wall (201); wherein
the first electrode assembly (221) comprises a first anode electrode plate (221a) and a first cathode electrode plate (221c) separated by a first separator (221b); the second electrode assembly (222) comprises a second anode electrode plate (222a) and a second cathode electrode plate (222c) separated by a second separator (222b); and the first anode electrode plate (221a) and the second cathode electrode plate (222c) are opposite and separated by a third separator (221d);
wherein the second anode electrode plate (222a), the second separator (222b), the second cathode electrode plate (222c), the third separator (221d), the first anode electrode plate (221a), the first separator (221b), and the first cathode electrode plate (221c) are stacked in sequence along the first direction, and have progressively increased widths in the second direction, the second direction being perpendicular to the first direction.

9. The battery cell (20) according to claim 8, **characterized in that** the battery cell (20) further comprises a third wall (203) connected to the first wall (201), wherein the third wall (203) is disposed opposite the second wall (202);
a plane on which edges, facing the second wall (202), of the second anode electrode plate (222a), the second separator (222b), the second cathode electrode plate (222c), the third separator (221d), the first anode electrode plate (221a), the first separator (221b), and the first cathode electrode plate (221c) are located is parallel to the second wall (202); and
a plane on which edges, facing the third wall (203), of the second anode electrode plate (222a), the second separator (222b), the second cathode electrode plate (222c), the third separator (221d), the first anode electrode plate (221a), the first separator (221b), and the first cathode electrode plate (221c) are located is parallel to the third wall (203).

10. The battery cell (20) according to any one of claims 5 to 9, **characterized in that** the battery cell (20) further comprises a first electrode terminal (2141) and a second electrode terminal (2142), wherein the first electrode terminal (2141) and the second electrode terminal (2142) are disposed on two different walls of the battery cell (20).

11. The battery cell (20) according to claim 10, **characterized in that** the battery cell (20) further comprises a fifth wall (205) and a sixth wall (206) disposed opposite each other, wherein the fifth wall (205) is connected to the first wall (201) and the second wall (202), and the sixth wall (206) is connected to the first wall (201) and the second wall (202);
the first electrode terminal (2141) is disposed on the fifth wall (205); and
the second electrode terminal (2142) is disposed on the sixth wall (206).

12. The battery cell (20) according to any one of claims 5 to 9, **characterized in that** the battery cell (20) further comprises a first electrode terminal (2141) and a second electrode terminal (2142), wherein the first electrode terminal (2141) and the second electrode terminal (2142) are disposed on a same wall of the battery cell (20).

13. The battery cell (20) according to claim 12, **characterized in that** the first electrode terminal (2141) and the second electrode terminal (2142) are disposed on a wall connected to both the first wall (201) and the second wall (202) of the battery cell (20).

14. A battery, **characterized by** comprising:
a box (11); and
multiple rows of battery cells (20) accommodated in the box (11), wherein the battery cell (20) is the battery cell (20) according to any one of claims 5 to 13; and
the multiple rows of battery cells (20) are arranged along the second direction, the second direction being perpendicular to the first direction, and the first direction being parallel to the direction of gravity, wherein the multiple rows of battery cells (20) comprise a first row of battery cells (20a) and a second row of battery cells (20b) disposed adjacent to each other along the second direction; and the first row of battery cells (20a) and the second row of battery cells (20b) are attached to each other through the second walls (202), so as to form interaction forces in the first direction between the first row of battery cells (20a) and the second row of battery cells (20b).

15. The battery according to claim 14, **characterized in that** the battery cell (20) further comprises a third wall (203) connected to the first wall (201), wherein the third wall (203) and the second wall (202) are disposed opposite each other and unparallel to each other; and
the multiple rows of battery cells (20) further comprise a third row of battery cells (20c), wherein the third row of battery cells (20c) and the second row of battery cells (20b) are disposed adjacent to each other along the second direction, and the third row of battery cells (20c) and the second row of battery cells (20b) are attached to each other through the third walls (203).

16. The battery according to claim 15, **characterized in that** the third wall (203) is disposed perpendicularly or inclined with respect to the first wall (201).

17. The battery according to claim 15 or 16, **characterized in that** under a condition that the third wall (203) is inclined with respect to the first wall (201), an included angle between the third wall (203) and the first wall (201) is equal to an included angle between the second wall (202) and the first wall (201).

18. The battery according to any one of claims 15 to 17, **characterized in that** an included angle between the second wall (202) and the first wall (201) is greater than or equal to 30° and less than 90°; and/or
an included angle between the third wall (203) and the first wall (201) is greater than or equal to 30° and less than 150°.

19. The battery according to claim 15 or 16, **characterized in that** the box (11) comprises a first box (11) inner wall, wherein the first box (11) inner wall is perpendicular to the first wall (201) and parallel to the third wall (203), and the third wall (203) is disposed perpendicular to the first wall (201).

20. The battery according to any one of claims 14 to 19, **characterized in that** the battery cell (20) further comprises a fourth wall (204) parallel to the first wall (201), wherein the fourth wall (204) is connected to the second wall (202); and
battery cells (20) in each of the multiple rows of battery cells (20) are stacked along the first direction; and in each row of the battery cells (20), the adjacent battery cells (20) are attached to each other through the first walls (201) and/or the fourth walls (204).

21. The battery according to any one of claims 14 to 20, **characterized in that** in each row of the battery cells (20), projections of the first walls (201) of any two of the battery cells (20) along the first direction overlap.

22. The battery according to any one of claims 14 to 20, **characterized in that** the battery cell (20) further comprises a third wall (203) connected to the first wall (201), wherein the third wall (203) is disposed opposite the second wall (202); and
battery cells (20) in each of the multiple rows of battery cells (20) are stacked along the first direction; and in each row of the battery cells (20), the third walls (203) of any two of the battery cells (20) are on a same plane.

23. The battery according to any one of claims 14 to 22, **characterized in that** the battery comprises N rows of battery cells (20), and each of the N rows of battery cells (20) comprises M battery cells (20), wherein N and M are positive integers greater than 1 and N is greater than or equal to M.

24. The battery according to any one of claims 14 to 23, **characterized in that** separation parts (25) perpendicular to the first direction are provided between the multiple rows of battery cells (20), and the separation part (25) is at least one of the following structures: a cross beam, a thermal management part, and a structural adhesive.

25. The battery according to any one of claims 14 to 24, **characterized in that** dimension of the battery cell (20) satisfies at least one of the following conditions:
thickness T of the battery cell (20) in the first direction satisfying 6 mm≤T≤150 mm; and
length W of the battery cell (20) in a third direction satisfying 100 mm≤W≤1200 mm.

26. An electric device, **characterized by** comprising the battery according to any one of claims 14 to 25, wherein the battery is configured to provide electric energy for the electric device.

27. A method for manufacturing battery, **characterized by** comprising:
providing a box (11);
providing multiple rows of battery cells (20),
wherein the battery cell (20) is of a polyhedral structure, and the battery cell (20) comprises a first electrode assembly (221) and a second electrode assembly (222), wherein the first electrode assembly (221) and the second electrode assembly (222) differ in size and/or capacity so as to fit a structure of the battery cell (20);
the battery cell (20) comprises a first wall (201) and a second wall (202) connected to each other, the first wall (201) being the largest wall of the battery cell (20), wherein the first wall (201) is disposed perpendicular to a first direction, the second wall (202) is inclined with respect to the first wall (201), and a cross section of the battery cell (20) on a plane perpendicular to the first wall (201) and the second wall (202) is a trapezoid; and
the multiple rows of battery cells (20) are arranged along a second direction, the second direction being perpendicular to the first direction, and the first direction being parallel to the direction of gravity, wherein the multiple rows of battery cells (20) comprise a first row of battery cells (20a) and a second row of battery cells (20b) disposed adjacent to each other along the second direction, and the first row of battery cells (20a) and the second row of battery cells (20b) are attached to each other through the second walls (202), so as to form interaction forces in the first direction between the first row of battery cells (20a) and the second row of battery cells (20b); and
accommodating the multiple rows of battery cells (20) in the box (11).

28. A device for manufacturing battery, **characterized by** comprising:
a providing module (410), configured to:
provide a box (11); and
provide multiple rows of battery cells (20);
wherein the battery cell (20) is of a polyhedral structure, and the battery cell (20) comprises a first electrode assembly (221) and a second electrode assembly (222), wherein the first electrode assembly (221) and the second electrode assembly (222) differ in size and/or capacity so as to fit a structure of the battery cell (20);
the battery cell (20) comprises a first wall (201) and a second wall (202) connected to each other, the first wall (201) being the largest wall of the battery cell (20), wherein the first wall (201) is disposed perpendicular to a first direction, the second wall (202) is inclined with respect to the first wall (201), and a cross section of the battery cell (20) on a plane perpendicular to the first wall (201) and the second wall (202) is a trapezoid; and
the multiple rows of battery cells (20) are arranged along a second direction, the second direction being perpendicular to the first direction, and the first direction being parallel to the direction of gravity, wherein the multiple rows of battery cells (20) comprise a first row of battery cells (20a) and a second row of battery cells (20b) disposed adjacent to each other along the second direction, and the first row of battery cells (20a) and the second row of battery cells (20b) are attached to each other through the second walls (202), so as to form interaction forces in the first direction between the first row of battery cells (20a) and the second row of battery cells (20b); and
a mounting module (420), configured to:
accommodate the multiple rows of battery cells (20) in the box (11).
